# EUROPEAN PATENT SPECIFICATION

(11) **EP 4 503 584 B1**
(45) Date of publication and mention of the grant of the patent: **08.07.2026**
(21) Application number: 24738264.1
(22) Date of filing: 22.03.2024
(51) Int. Cl.: H04M 1/72454, H04M 1/60, H04M 1/72433, H04M 1/725, G06F 3/01

(54) **SPEECH MESSAGE PLAYING METHOD AND ELECTRONIC DEVICE**
VERFAHREN ZUR WIEDERGABE VON SPRACHNACHRICHTEN UND ELEKTRONISCHE VORRICHTUNG
PROCÉDÉ DE LECTURE DE MESSAGE VOCAL ET DISPOSITIF ÉLECTRONIQUE

(30) Priority: 13.06.2023 CN 202310697883
(43) Date of publication of application: 05.02.2025
(73) Proprietor: Honor Device Co., Ltd., Shenzhen, Guangdong 518040 (CN)
(72) Inventor: XIAO, Laicheng, Shenzhen, Guangdong 518040 (CN); LI, Chenlong, Shenzhen, Guangdong 518040 (CN); ZHANG, Wenli, Shenzhen, Guangdong 518040 (CN); LIU, Tieliang, Shenzhen, Guangdong 518040 (CN)
(74) Representative: MERH-IP Matias Erny Reichl Hoffmann Patentanwälte PartG mbB
(86) International application number: PCT/CN2024/083255
(87) International publication number: WO 2024/255380

(56) References cited:
- EP-A2- 2 983 063
- CN-A- 103 811 033
- CN-A- 106 941 564
- CN-A- 109 547 629
- CN-A- 109 995 913
- CN-A- 111 405 110
- CN-A- 116 489 272
- US-A1- 2009 186 654
- US-A1- 2022 057 888

## Description

This application claims priority to Chinese Patent Application No. 202310697883.5, filed with the China National Intellectual Property Administration on June 13, 2023 and entitled "VOICE MESSAGE PLAYBACK METHOD AND ELECTRONIC DEVICE".

### TECHNICAL FIELD

This application relates to the field of terminal devices, and in particular, to a voice message playback method and an electronic device.

### BACKGROUND

Currently, with development of a terminal technology, a function of a terminal application is increasingly powerful, for example, a user may use a chat application to perform text communication and voice communication. The voice communication includes but is not limited to a video call, a voice call, a voice message, and the like. When the user picks up a mobile phone and listens to a voice message next to an ear, the chat application obtains a proximity state detected by an optical proximity sensor, starts an accidental touch prevention procedure, automatically switches from a speaker playback manner to an earpiece playback manner, and turns off a screen, to prevent an accidental touch. Correspondingly, when the user puts down the mobile phone, the chat application obtains a remote state detected by the optical proximity sensor, disables the accidental touch prevention procedure, and automatically switches from the earpiece playback manner to the speaker playback manner, and the screen is turned on.

However, because the optical proximity sensor may report a false alarm, the chat application mistakenly disables the accidental touch prevention procedure when the user listens to the voice message next to the ear. Consequently, when the mobile phone is still next to the ear of the user, the chat application has switched to the speaker playback mode, and the screen is turned on, which affects user experience.
US 2022/057888 A1 discloses that in a scenario in which a user holds the terminal near an ear to make a call, when the proximity sensor does not detect proximity of a head of the user due to a first included angle between light emitted by a proximity sensor and a touchscreen of the terminal, if the head (an ear or a face) of the user is in contact with the touchscreen, the terminal may identify that an object is approaching, and further turn off the screen.
EP 2 983 063 A2 discusses methods which monitor the acoustic echo path around a device to enable speaker switching based on ear-fit/hands-free mode detection.

### SUMMARY

This application provides a voice message playback method and an electronic device. In this method, the electronic device may obtain an optical proximity status based on an algorithm, and correct the optical proximity status detected by an optical proximity sensor, to avoid affecting user experience due to a false alarm. The technical solution is defined according to the appended claims.

According to a first aspect, this application provides a voice message playback method. The method includes: An electronic device invokes, in response to a received tap operation on a voice message, a speaker to play the voice message, where a display screen of the electronic device is in a screen-on state; in a process of playing the voice message by the electronic device, the electronic device obtains a first optical proximity status based on a detection result of an optical proximity sensor, and the electronic device obtains a second proximity status based on first status data, where status data includes posture data and motion data, the posture data is used to describe a current posture of the electronic device, and the motion data is used to describe a current motion state of the electronic device; the electronic device detects that both the first optical proximity status and the second proximity status indicate a remote state, and continues to invoke the speaker to play the voice message, where the display screen of the electronic device is in a screen-on state; and obtains a third optical proximity status based on a detection result of the optical proximity sensor when a user raises a hand to put the electronic device next to an ear to listen to the voice message; the electronic device obtains a fourth proximity status based on second status data; and when the electronic device detects that the third optical proximity status indicates a remote state, and the fourth proximity status indicates a proximity state, the electronic device determines the third optical proximity status as an abnormal state, and the electronic device determines, based on the fourth proximity status, that the electronic device is in a next-to-ear listening scenario, and invokes an earpiece to play the voice message, where the display screen of the electronic device is in a screen-off state. In this way, the electronic device in this application can calculate an optical proximity status of the electronic device by using the posture and the motion state of the electronic device, to correct a detection result of the optical proximity sensor in a case of a false alarm of the optical proximity sensor, to obtain a correct optical proximity status. Therefore, the electronic device can control, based on the correct optical proximity status, a mode in which the electronic device plays the voice message. In addition, after the speaker is enabled, a gesture auxiliary algorithm continuously obtains status data, so that the gesture auxiliary algorithm can obtain a corresponding optical proximity status in real time. Correspondingly, the electronic device can also invoke, in real time, the optical proximity status calculated by the algorithm.

For example, the status data is ACC data. The posture data includes but is not limited to a pitch angle and a roll angle. The motion data includes but is not limited to a handupJudge parameter.

In a possible implementation, the method further includes: The electronic device obtains a fifth optical proximity status based on a detection result of the optical proximity sensor in a process in which the user continues to put the electronic device next to the ear to listen to the voice message; the electronic device obtains a sixth proximity status based on third status data; and the electronic device detects that the fifth optical proximity status indicates a remote state, and the sixth proximity status indicates a proximity state, determines the fifth optical proximity status as an abnormal state, determines, based on the sixth proximity status, that the electronic device is still in the next-to-ear listening scenario, and continues to invoke the earpiece to play the voice message, where the display screen of the electronic device is in a screen-off state. In this way, after the earpiece is enabled, the electronic device can obtain an accurate motion state of the electronic device based on a status parameter obtained before the earpiece is enabled and a currently obtained status parameter, to obtain an accurate optical proximity status based on the algorithm.

In a possible implementation, the detecting that both the first optical proximity status and the second proximity status indicate a remote state, and continuing to invoke the speaker to play the voice message, where the display screen of the electronic device is in a screen-on state includes: The electronic device detects whether the earpiece is in an enabled state; the electronic device detects that the earpiece is in a disabled state, and determines whether the first optical proximity status indicates a remote state; the electronic device determines that the first optical proximity status indicates a remote state, and determines whether the second proximity status indicates a proximity state; the electronic device determines that the second proximity status indicates a remote state, and determines that a current target optical proximity status of the electronic device is a remote state; and the electronic device continues to invoke the speaker to play the voice message based on the target optical proximity status, where the display screen of the electronic device is in a screen-on state. In this way, the electronic device may determine, based on a result of the optical proximity sensor, whether it is necessary to perform determining in combination with the optical proximity status obtained by the algorithm. When it is necessary to combine the algorithm, the optical proximity status calculated by the algorithm is invoked, to further determine whether there is a false alarm in the result detected by the optical proximity sensor.

In a possible implementation, that the electronic device detects that the third optical proximity status indicates a remote state, and the fourth proximity status indicates a proximity state, and determines the third optical proximity status as an abnormal state includes: The electronic device detects whether the earpiece is in an enabled state; the electronic device detects that the earpiece is in a disabled state, and determines whether the third optical proximity status indicates a remote state; the electronic device determines that the third optical proximity status indicates a remote state, and determines whether the fourth proximity status indicates a proximity state; the electronic device determines that the fourth proximity status indicates a proximity state, and determines the third optical proximity status as an abnormal state based on the third optical proximity status and the fourth proximity status; and the electronic device determines the fourth proximity status as a target optical proximity status. In this way, the electronic device may determine, based on a result of the optical proximity sensor, whether it is necessary to perform determining in combination with the optical proximity status obtained by the algorithm. When it is necessary to combine the algorithm, the optical proximity status calculated by the algorithm is invoked, to further determine whether there is a false alarm in the result detected by the optical proximity sensor.

In a possible implementation, the determining, based on the fourth proximity status, that the electronic device is in a next-to-ear listening scenario, and invoking an earpiece to play the voice message, where the display screen of the electronic device is in a screen-off state includes: The electronic device determines, based on the target optical proximity status, that the electronic device is in the next-to-ear listening scenario, and invokes the earpiece to play the voice message, where the display screen of the electronic device is in a screen-off state. In this way, the electronic device can determine, based on results of the algorithm and the optical proximity sensor, whether the electronic device is currently in a next-to-ear listening state, to obtain an accurate result, and control, based on a finally determined target optical proximity status, a mode in which the electronic device plays the voice message.

In a possible implementation, the detecting that the fifth optical proximity status indicates a remote state, and the sixth proximity status indicates a proximity state, and determining the fifth optical proximity status as an abnormal state includes: The electronic device detects whether the earpiece is in an enabled state; the electronic device detects that the earpiece is in an enabled state, and determines whether the sixth proximity status indicates a proximity state; the electronic device determines that the sixth proximity indicates a proximity state, and determines the fifth optical proximity status as an abnormal state based on the fifth optical proximity status and the sixth proximity status; and the electronic device determines the sixth proximity status as a target optical proximity status. In this way, before the earpiece is enabled, the electronic device can obtain status data, and lock a gesture lock based on the status data, that is, lock an optical proximity status. Therefore, in the next-to-ear listening scenario of the electronic device, even if there is a false alarm of the optical proximity sensor, based on that the gesture lock is locked to a proximity state, an optical proximity status finally obtained by the electronic device is still a proximity state, and is not affected by a false alarm of the sensor.

In a possible implementation, that the electronic device determines, based on the sixth proximity status, that the electronic device is still in the next-to-ear listening scenario, and continues to invoke the earpiece to play the voice message, where the display screen of the electronic device is in a screen-off state includes: determining, based on the target optical proximity status, that the electronic device is in the next-to-ear listening scenario, and continuing to invoke the earpiece to play the voice message, where the display screen of the electronic device is in a screen-off state. In this way, the electronic device can correct abnormal reporting of the optical proximity sensor based on the optical proximity status obtained by the algorithm, and control, based on a correct optical proximity status, a mode in which the electronic device plays the voice message.

According to a second aspect, this application provides an electronic device, including one or more processors and a memory; and one or more computer programs, where the one or more computer programs are stored in the memory, and when the computer programs are executed by the one or more processors, the electronic device is enabled to perform the following steps: in response to a received tap operation on a voice message, invoking a speaker to play the voice message, where a display screen of the electronic device is in a screen-on state; obtaining a first optical proximity status based on a detection result of an optical proximity sensor; obtaining a second proximity status based on first status data, where status data includes posture data and motion data, the posture data is used to describe a current posture of the electronic device, and the motion data is used to describe a current motion state of the electronic device; detecting that both the first optical proximity status and the second proximity status indicate a remote state, and continuing to invoke the speaker to play the voice message, where the display screen of the electronic device is in a screen-on state; obtaining a third optical proximity status based on a detection result of the optical proximity sensor when a user raises a hand to put the electronic device next to an ear to listen to the voice message; obtaining a fourth proximity status based on second status data; and detecting that the third optical proximity status indicates a remote state, and the fourth proximity status indicates a proximity state, determining the third optical proximity status as an abnormal state, determining, based on the fourth proximity status, that the electronic device is in a next-to-ear listening scenario, and invoking an earpiece to play the voice message, where the display screen of the electronic device is in a screen-off state.

In a possible implementation, when the computer programs are executed by the one or more processors, the electronic device is enabled to perform the following steps: obtaining a fifth optical proximity status based on a detection result of the optical proximity sensor in a process in which the user continues to put the electronic device next to the ear to listen to the voice message; obtaining a sixth proximity status based on third status data; and detecting that the fifth optical proximity status indicates a remote state, and the sixth proximity status indicates a proximity state, determining the fifth optical proximity status as an abnormal state, determining, based on the sixth proximity status, that the electronic device is still in the next-to-ear listening scenario, and continuing to invoke the earpiece to play the voice message, where the display screen of the electronic device is in a screen-off state.

In a possible implementation, when the computer programs are executed by the one or more processors, the electronic device is enabled to perform the following steps: detecting whether the earpiece is in an enabled state; detecting that the earpiece is in a disabled state, and determining whether the first optical proximity status indicates a remote state; determining that the first optical proximity status indicates a remote state, and determining whether the second proximity status indicates a proximity state; determining that the second proximity status indicates a remote state, and determining that a current target optical proximity status of the electronic device is a remote state; and continuing to invoke the speaker to play the voice message based on the target optical proximity status, where the display screen of the electronic device is in a screen-on state.

In a possible implementation, when the computer programs are executed by the one or more processors, the electronic device is enabled to perform the following steps: detecting whether the earpiece is in an enabled state; detecting that the earpiece is in a disabled state, and determining whether the third optical proximity status indicates a remote state; determining that the third optical proximity status indicates a remote state, and determining whether the fourth proximity status indicates a proximity state; determining that the fourth proximity status indicates a proximity state, and determining the third optical proximity status as an abnormal state based on the third optical proximity status and the fourth proximity status; and determining the fourth proximity status as a target optical proximity status.

In a possible implementation, when the computer programs are executed by the one or more processors, the electronic device is enabled to perform the following steps: determining, based on the target optical proximity status, that the electronic device is in the next-to-ear listening scenario, and invoking the earpiece to play the voice message, where the display screen of the electronic device is in a screen-off state.

In a possible implementation, when the computer programs are executed by the one or more processors, the electronic device is enabled to perform the following steps: detecting whether the earpiece is in an enabled state; detecting that the earpiece is in an enabled state, and determining whether the sixth proximity status indicates a proximity state; determining that the sixth proximity indicates a proximity state, and determining the fifth optical proximity status as an abnormal state based on the fifth optical proximity status and the sixth proximity status; and determining the sixth proximity status as a target optical proximity status.

In a possible implementation, when the computer programs are executed by the one or more processors, the electronic device is enabled to perform the following steps: determining, based on the target optical proximity status, that the electronic device is in the next-to-ear listening scenario, and continuing to invoke the earpiece to play the voice message, where the display screen of the electronic device is in a screen-off state.

The second aspect and any implementation of the second aspect respectively correspond to the first aspect and any implementation of the first aspect. For technical effects corresponding to the second aspect and the any implementation of the second aspect, refer to technical effects corresponding to the first aspect and the any implementation of the first aspect. Details are not described herein again.

According to a third aspect, this application provides a computer-readable medium, configured to store a computer program, and the computer program includes instructions for performing the method in the first aspect or any possible implementation of the first aspect.

According to a fourth aspect, this application provides a computer program, and the computer program includes instructions for performing the method in the first aspect or any possible implementation of the first aspect.

According to a fifth aspect, this application provides a chip, where the chip includes a processing circuit and a transceiver pin. The transceiver pin and the processing circuit communicate with each other through an internal connection channel. The processing circuit performs the method in the first aspect or any possible implementation of the first aspect, to control a receive pin to receive a signal, and to control a transmit pin to send a signal.

### BRIEF DESCRIPTION OF DRAWINGS

FIG. 1 is an example schematic diagram of a hardware structure of an electronic device;
FIG. 2 is an example schematic diagram of a software structure of an electronic device;
FIG. 3 is an example schematic diagram of a user interface;
FIG. 4A is an example schematic diagram of an application scenario;
FIG. 4B is an example schematic diagram of an application scenario;
FIG. 4C~FIG. 4D are example schematic diagrams of module interaction;
FIG. 5 is an example schematic flowchart of a voice message playback method;
FIG. 6 is an example schematic flowchart of a voice message playback method;
FIG. 7 is an example schematic diagram of a procedure of calculating a status value of a gesture auxiliary algorithm;
FIG. 8 is an example schematic flowchart of a voice message playback method;
FIG. 9A~FIG. 9B are example schematic flowcharts of a voice message playback method;
FIG. 10 is an example schematic diagram of a procedure of calculating a gesture lock;
FIG. 11 is an example schematic flowchart of a voice playback method;
FIG. 12 is an example schematic diagram of a procedure of voice message playback; and
FIG. 13 is an example schematic diagram of a structure of an apparatus.

### DESCRIPTION OF EMBODIMENTS

The technical solutions of the embodiments of this application are clearly and completely described below with reference to the accompanying drawings of the embodiments of this application. Clearly, the described embodiments are some rather than all of the embodiments of this application. All other embodiments obtained by a person of ordinary skill in the art based on the embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of target objects.

In the embodiments of this application, words such as "example" or "for example" are used to indicate an example, illustration, or description. Any embodiment or design solution described as "example" or "for example" in the embodiments of this application should not be explained as being preferred or advantageous over other embodiments or design solutions. Exactly, use of the words such as "example" or "for example" is intended to present related concepts in a specific manner.

In the description of the embodiments of this application, unless otherwise stated, "a plurality of" means two or more. For example, a plurality of processing units refer to two or more processing units, and a plurality of systems refer to two or more systems.

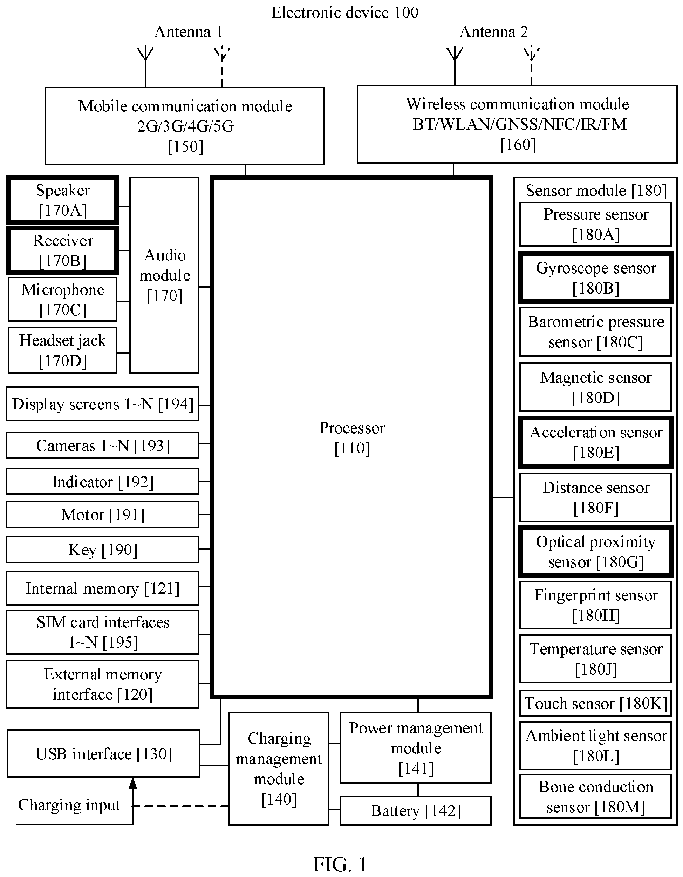

FIG. 1 is a schematic diagram of a structure of an electronic device 100. It should be understood that the electronic device 100 shown in FIG. 1 is merely an example of the electronic device, and the electronic device 100 may have more or fewer components than those shown in the figure, two or more components may be combined, or there may be a different component configuration. The various components shown in FIG. 1 may be implemented in hardware that includes one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display screen 194, the camera 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to increase antenna utilization. For example, the antenna 1 may be multiplexed as a diversity antenna in a wireless local area network. In some other embodiments, the antenna may be used in combination with a tuning switch.

The mobile communication module 150 may provide a solution for wireless communication including 2G/3G/4G/5G and the like applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the receiver 170B, and the like), or displays an image or a video by using the display screen 194. In some embodiments, the modem processor may be an independent device. In some other embodiments, the modem processor may be independent of the processor 110, and is disposed in a same device as the mobile communication module 150 or another functional module.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS) and/or a satellite based augmentation system (satellite based augmentation systems, SBAS).

The electronic device 100 implements a display function by using the GPU, the display screen 194, the application processor, and the like. The GPU is a microprocessor for image processing and is connected to the display screen 194 and the application processor. The GPU is configured to perform mathematical and geometric computing for graphics rendering. The processor 110 may include one or more GPUs that execute program instructions to generate or change displayed information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), and the like. In some embodiments, the electronic device 100 may include one or N display screens 194, where N is a positive integer greater than 1.

The electronic device 100 may implement a shooting function by using the ISP, the camera 193, the video codec, the GPU, the display screen 194, the application processor, and the like.

The ISP is configured to process data fed back by the camera 193. For example, during photographing, a shutter is opened, light is transmitted to a photosensitive element of the camera through a lens, an optical signal is converted into an electrical signal, and the photosensitive element of the camera transmits the electrical signal to the ISP for processing, to convert the electrical signal into an image visible to naked eyes. The ISP may further perform algorithm optimization on noise and brightness of the image. The ISP may further optimize parameters such as exposure and a color temperature of a shooting scenario. In some embodiments, the ISP may be disposed in the camera 193.

The camera 193 is configured to capture a still image or a video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of encoding formats, such as moving picture experts group (moving picture experts group, MPEG)1, MPEG2, MPEG3, and MPEG4.

The NPU is a neural-network (neural-network, NN) computing processor that quickly processes input information by referring to a biological neural network structure, for example, by referring to a transmission mode between human brain neurons, and may further perform self-learning continuously. Applications such as intelligent cognition of the electronic device 100, for example, image recognition, face recognition, voice recognition, and text understanding, may be implemented by using the NPU.

The external memory interface 120 may be configured to connect to an external memory card, for example, a Micro SD card, to expand a storage capability of the electronic device 100. The external memory card communicates with the processor 110 by using the external memory interface 120, to implement a data storage function, for example, to store files such as music and a video in the external memory card.

The internal memory 121 may be configured to store computer-executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playback function or an image playback function), and the like. The data storage area may store data (such as audio data and a phone book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

The electronic device 100 may implement an audio function by using the audio module 170, the speaker 170A, the receiver 170B, the microphone 170C, the headset jack 170D, the application processor, and the like. For example, music playing and sound recording are implemented.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, further identify a sound source, implement a directional sound recording function, and the like.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines intensity of pressure based on a change of the capacitance. When a touch operation is performed on the display screen 194, the electronic device 100 detects intensity of the touch operation based on the pressure sensor 180A. The electronic device 100 may also calculate a touch location based on a detected signal of the pressure sensor 180A. In some embodiments, touch operations performed at a same touch location but having different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device 100. In some embodiments, angular velocities of the electronic device 100 around three axes (namely, an x axis, a y axis, and a z axis) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in scenarios of navigation and a motion sensing game.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening/closing of a flip leather case by using the magnetic sensor 180D. In some embodiments, when the electronic device 100 is a flip phone, the electronic device 100 may detect opening/closing of a flip cover based on the magnetic sensor 180D, and further set features such as automatic unlocking of the flip cover based on a detected opening/closing state of the leather case or a detected opening/closing state of the flip cover.

The acceleration sensor 180E may detect magnitudes of acceleration in various directions (usually on three axes) of the electronic device 100, may detect a magnitude and a direction of gravity when the electronic device 100 is still, and may be further configured to identify a posture of the electronic device, and is applied to applications such as switching between a landscape mode and a portrait mode and a pedometer.

The distance sensor 180F is configured to measure a distance. The electronic device 100 may measure a distance by using infrared or laser. In some embodiments, in a shooting scenario, the electronic device 100 may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The electronic device 100 emits infrared light to the outside by using the light-emitting diode. The electronic device 100 uses the photodiode to detect reflected infrared light from a nearby object. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to implement automatic screen-off to save power. The optical proximity sensor 180G may alternatively be used in a leather case mode or a pocket mode to automatically unlock or lock a screen.

The ambient light sensor 180L is configured to sense ambient light brightness. The electronic device 100 may adaptively adjust brightness of the display screen 194 based on the sensed ambient light brightness. The ambient light sensor 180L may be further configured to automatically adjust white balance during photographing. The ambient light sensor 180L may further cooperate with the optical proximity sensor 180G to detect whether the electronic device 100 is in a pocket to prevent an accidental touch.

The fingerprint sensor 180H is configured to collect a fingerprint. The electronic device 100 may implement fingerprint unlocking, application lock accessing, fingerprint-based photographing, fingerprint-based incoming call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor located near the temperature sensor 180J, to reduce power consumption and implement thermal protection. In some other embodiments, when the temperature is less than another threshold, the electronic device 100 heats the battery 142, to prevent the electronic device 100 from being abnormally powered off due to a low temperature. In some other embodiments, when the temperature is less than still another threshold, the electronic device 100 boosts an output voltage of the battery 142, to avoid abnormal power-off due to a low temperature.

The touch sensor 180K is also referred to as a "touch panel". The touch sensor 180K may be disposed on the display screen 194. The touch sensor 180K and the display screen 194 form a touchscreen, also referred to as a "touch control screen". The touch sensor 180K is configured to detect a touch operation performed on or near the touch sensor 180K. The touch sensor may transmit the detected touch operation to the application processor to determine a type of a touch event. A visual output related to the touch operation may be provided by using the display screen 194. In some other embodiments, the touch sensor 180K may alternatively be disposed on a surface of the electronic device 100, at a location different from that of the display screen 194.

The bone conduction sensor 180M may obtain a vibration signal. In some embodiments, the bone conduction sensor 180M may obtain a vibration signal of a vibration bone in a human vocal-cord part. The bone conduction sensor 180M may alternatively be in contact with a human pulse to receive a blood pressure pulse signal. In some embodiments, the bone conduction sensor 180M may alternatively be disposed in a headset, to form a bone conduction headset in combination with the headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure pulse signal obtained by the bone conduction sensor 180M, to implement a heart rate detection function.

The key 190 includes a power-on/off key, a volume key, and the like. The key 190 may be a mechanical key, or may be a touch key. The electronic device 100 may receive a key input and generate a key signal input related to user settings and function control of the electronic device 100.

The motor 191 may generate a vibration prompt. The motor 191 may be configured to provide a vibration prompt for an incoming call, and may be further configured to provide vibration feedback for a touch. For example, touch operations performed on different applications (for example, photographing and audio playback) may correspond to different vibration feedback effects. The motor 191 may also correspond to different vibration feedback effects for touch operations performed on different areas of the display screen 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status or a power change, and may be further configured to indicate a message, a missed incoming call, a notification, and the like.

A software system of the electronic device 100 may use a layered architecture, an event-driven architecture, a microkernel architecture, a microservice architecture, or a cloud architecture. In embodiments of this application, an Android system with a layered architecture is used as an example to describe a software structure of the electronic device 100.

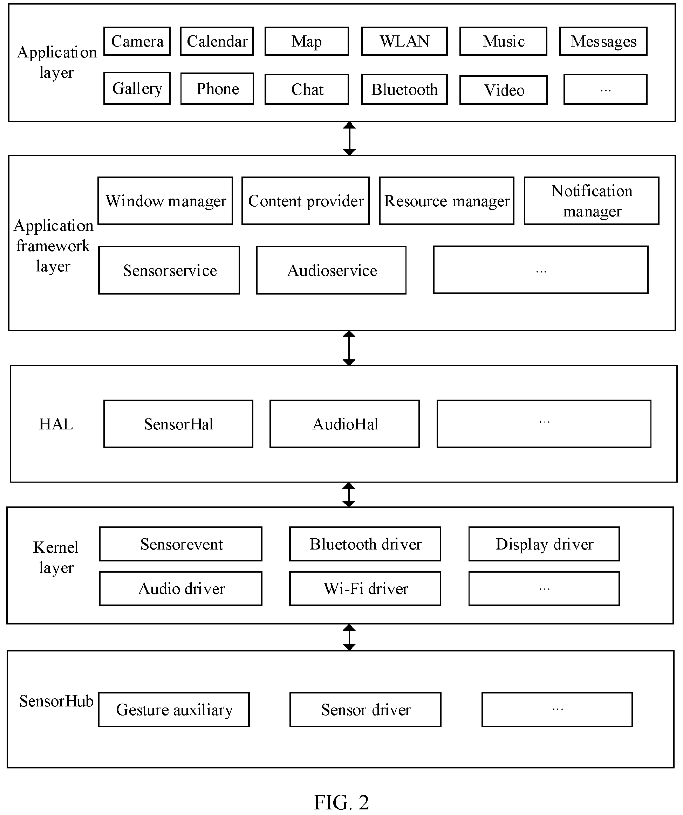

FIG. 2 is a block diagram of a software structure of an electronic device 100 according to an embodiment of this application.

In the layered architecture of the electronic device 100, software is divided into several layers, and each layer has a clear role and task. The layers communicate with each other through software interfaces. In some embodiments, the Android system is divided into four layers from top to bottom: an application layer, an application framework layer, a hardware abstraction layer (hardware abstraction layer, HAL), and a kernel layer.

The application layer may include a series of application packages.

As shown in FIG. 2, the application packages may include applications such as Camera, Gallery, Calendar, Phone, Map, Navigation, WLAN, Bluetooth, Music, Video, Messages, and Chat. The chat application may be an application pre-installed on the electronic device, or may be a third-party application. This is not limited in this application. In this embodiment of this application, only a chat application is used as an example for description. In another embodiment, the method in the embodiments of this application may be applied to any application that can send a voice message. This is not limited in this application.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, Sensorservice (a sensor service), Audioservice (an audio service), and the like.

The window manager is configured to manage a window program. The window manager may obtain a size of a display screen, determine whether a status bar exists, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

Sensorservice is used to provide a related service of a sensor and provide a service interface for an upper-layer application.

Audioservice is used to provide an audio-related service and provide a service interface for the upper-layer application.

The HAL layer is an interface layer located between an operating system kernel and a hardware circuit. The HAL layer includes but is not limited to: SensorHal (a sensor hardware abstraction layer), AudioHal (an audio hardware abstraction layer), and the like.

The Audio HAL is used to process an audio stream, for example, perform processing such as noise reduction and directional enhancement on the audio stream.

SensorHal is used to process an event reported by a sensor driver.

The kernel layer is a layer between hardware and software. The kernel layer includes at least a display driver, a Sensorevent module, an audio driver, a Bluetooth driver, a Wi-Fi driver, and the like.

The display driver is configured to control display of a display.

Sensorevent is used to record an earpiece status or a speaker status.

The audio driver is configured to control an audio component, which includes, for example, but is not limited to an earpiece, a speaker, and the like.

A SensorHub (sensor assembly) layer includes but is not limited to a gesture auxiliary module and the sensor driver.

The gesture auxiliary module is configured to control a gesture lock. The gesture lock may also be understood as an optical proximity status lock, and is configured to lock an optical proximity status. If the gesture lock is in a locked state, that is, the optical proximity status is locked, an optical proximity status reported by an optical proximity driver is a proximity state. If the gesture lock is unlocked, that is, the optical proximity status is unlocked, the optical proximity driver reports the optical proximity status based on an actually detected optical proximity status (which may be a remote state, or may be a proximity state).

The sensor driver is configured to control a sensor status (for example, enabled or disabled) and receive a sensing parameter reported by the sensor. Optionally, the sensor driver may further include sensor drivers corresponding to different sensors. For example, in this embodiment of this application, the sensor driver may include an optical proximity driver, to control the optical proximity sensor and receive a sensing parameter uploaded by the optical proximity sensor. Optionally, the sensor driver may further include an acceleration sensor and the like. This is not limited in this application.

It may be understood that the layers in the software structure shown in FIG. 2 and the components included in the layers do not constitute a specific limitation on the electronic device 100. In some other embodiments of this application, the electronic device 100 may include more or fewer layers than those shown in the figure, and each layer may include more or fewer components. This is not limited in this application.

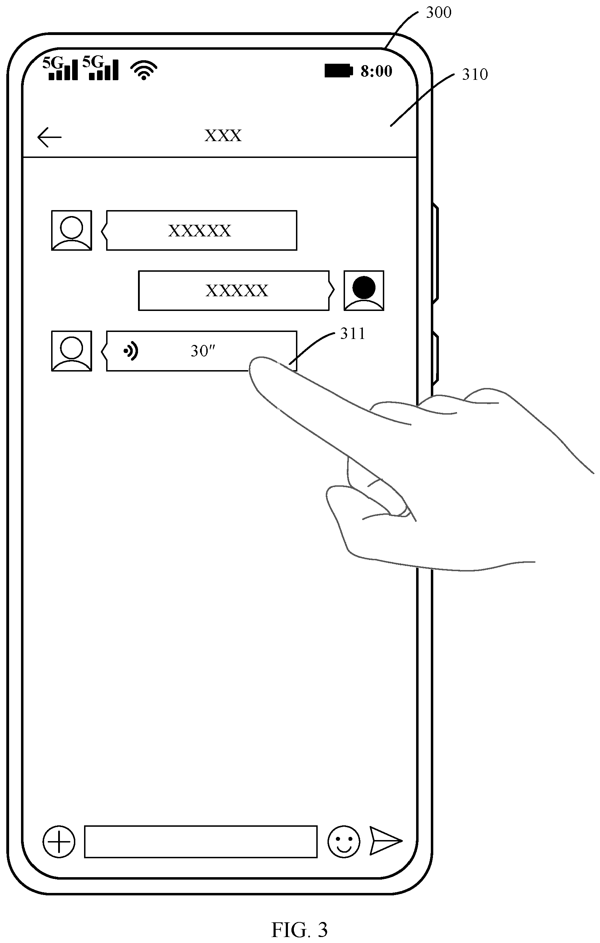

FIG. 3 is an example schematic diagram of a user interface. Referring to FIG. 3, a display interface 300 includes a chat application interface 310. The chat application interface includes but is not limited to a chat box, an input box, and the like. The chat box is used to display received and sent chat messages. In this embodiment of this application, the chat message includes but is not limited to a voice chat message 311 (briefly referred to as a voice message below), a text chat message (briefly referred to as a text message), and the like.

As shown in FIG. 3, a user may tap the voice message 311 to indicate a mobile phone to play the voice message. It should be noted that in this embodiment of this application, only that an electronic device is a mobile phone is used as an example for description. In another embodiment, the electronic device may alternatively be a wearable device (for example, a smartwatch or a smart band), a tablet, or the like. This is not limited in this application.

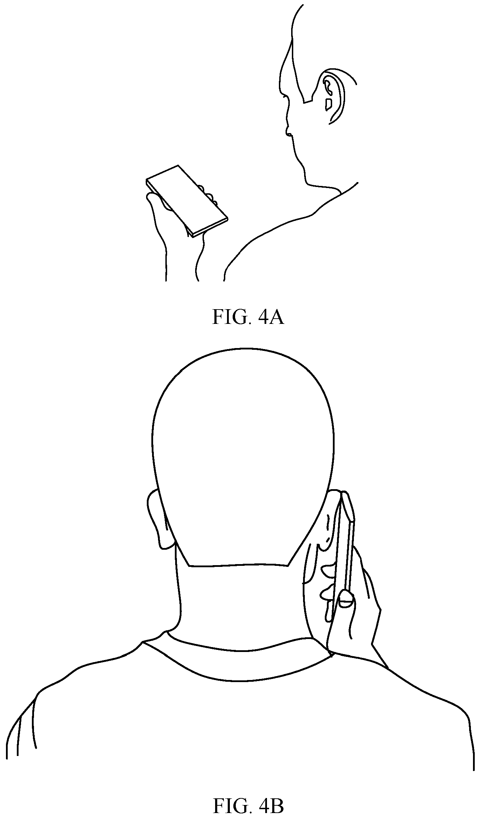

For example, in a schematic diagram of a scenario shown in FIG. 4A, in this embodiment of this application, when the user taps the voice message 311, the mobile phone is usually in a remote state. In this embodiment of this application, the remote state may be understood as a non-next-to-ear listening state. In the scenario shown in FIG. 4A, if the user needs to tap the voice message 311, a posture of the user is usually to hold the mobile phone with one hand (which may be a left hand or a right hand). In addition, the user may observe a display interface of the mobile phone, to tap the voice message 311. In this embodiment of this application, after the user taps the voice message 311, the mobile phone (specifically, the chat application) plays the voice message 311 by using a speaker in response to a received user operation. It may alternatively be understood that, in a remote state, the mobile phone plays audio content in the voice message 311 by using the speaker. In addition, the display interface 300 is in a screen-on state, that is, displays an interface shown in FIG. 3.

In this embodiment of this application, a state corresponding to a remote state is a proximity state, which may also be understood as a next-to-ear listening state. FIG. 4B is a schematic diagram of a next-to-ear listening scenario. In FIG. 4B, the user may move from a remote state of holding the mobile phone shown in FIG. 4A to an ear side of the user, so that an earpiece of the mobile phone is close to the ear side of the user, that is, is in a proximity state. In this scenario, if detecting that the mobile phone is currently in a proximity state, the mobile phone may start an accidental touch prevention procedure, that is, play a voice message by using the earpiece, and turn off a screen (that is, darken the display interface 300). In this embodiment of this application, after the mobile phone turns off the screen, a touch event is locked, that is, a touch sensor no longer detects the touch event, to prevent an accidental touch.

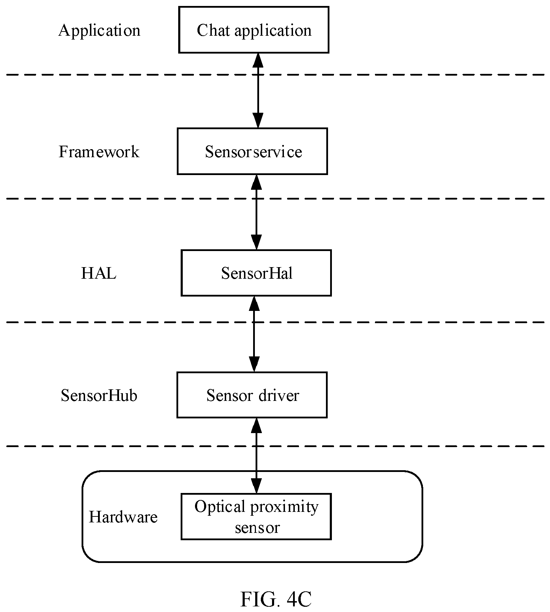

With reference to the scenarios shown in FIG. 4A and FIG. 4B, FIG. 4C~FIG. 4D are example schematic diagrams of module interaction. Referring to FIG. 4C, when listening to a voice message, the chat application registers an optical proximity monitoring event. Specifically, the chat application may send a registration and monitoring message to Sensorservice. Sersorservice receives the registration and monitoring message and sends activate (activate) information to SersorHal. SersorHal indicates, in response to the received activate message, a sensor driver (which may be specifically an optical proximity driver) to trigger (namely, start) an optical proximity sensor. The optical proximity sensor detects optical proximity. For a specific detection manner, refer to conventional technology embodiments. This is not limited in this application.

In this embodiment of this application, the optical proximity sensor may continuously report detected sensor parameters to the optical proximity driver, and the optical proximity driver may determine a corresponding optical proximity event based on the received sensor parameter. This is not limited in this application. The optical proximity event includes but is not limited to a proximity event and a remote event. Optionally, the sensor driver may report a related event to the optical proximity driver when determining that optical proximity event switching (for example, switching from a proximity event to a remote event or switching from a remote event to a proximity event, which is not limited in this application) occurs.

Optionally, the optical proximity sensor may alternatively report the optical proximity event to the sensor driver based on a detected parameter (which may be referred to as the sensor parameter or an optical proximity parameter). The optical proximity event includes but is not limited to a proximity event and a remote event. Optionally, the optical proximity sensor may report a related event to the optical proximity driver only when a switching event occurs.

For example, after determining that the optical proximity event (including a remote event or a proximity event) occurs, the sensor driver reports the optical proximity event to SensorHal. SensorHal sends the optical proximity event to Sensorservice in response to the received optical proximity event. Sensorservice sends the optical proximity event to the chat application.

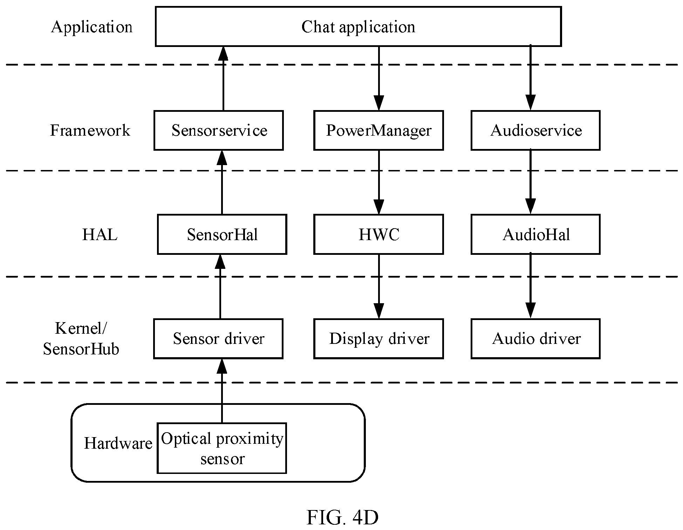

In this embodiment of this application, if the user picks up the mobile phone for listening, the chat application receives a proximity event reported by the optical proximity driver by using another module, which may alternatively be understood that the optical proximity driver reports the proximity state. The chat application starts the accidental touch prevention procedure in response to the reported proximity state (namely, the proximity event). As shown in FIG. 4D, for example, the chat application sends an indication message to a PoserManager (power management) module, to indicate to start a screen-off procedure. The PoserManager module sends a screen-off instruction to a hardware composer (Hardware Composer, HWC). The HWC sends the screen-off instruction to a display driver. The display driver controls, in response to the received screen-off instruction, a display screen to turn off.

For example, the chat application simultaneously sends an earpiece playback instruction to Audioservice to instruct to invoke the earpiece to play a current voice message. Audioservice sends the earpiece playback instruction to AudioHal, and AudioHal sends the earpiece playback instruction to an audio driver. In response to the received instruction, the audio driver invokes the earpiece (namely, the receiver shown in FIG. 1) to play current audio data, namely, voice content in the voice message.

In the procedures shown in FIG. 4B and FIG. 4C, whether the chat application starts the accidental touch prevention procedure depends on a detection result of the optical proximity sensor. In some embodiments, if detection of the optical proximity sensor is incorrect, for example, a proximity state is detected as a remote state. For example, hair of the user possibly blocks a detection signal of the optical proximity sensor, and the hair of the user possibly absorbs the detection signal of the optical proximity sensor. Consequently, the optical proximity sensor fails to receive a reflected detection signal. Correspondingly, a detection result of the optical proximity sensor indicates that a current optical proximity status is a remote state. As described above, the detection result is possibly determined by the optical proximity sensor, or is possibly determined by the optical proximity driver. This is not limited in this application. In this abnormal scenario, due to a false alarm of the optical proximity sensor, the chat application disables the accidental touch prevention procedure. Specifically, still referring to FIG. 4C, the chat application disables the accidental touch prevention procedure in response to the received proximity state. The chat application sends an indication message to the PoserManager module, to indicate to disable a screen-off procedure. The PoserManager module sends a screen-on instruction to the HWC. The HWC sends the screen-on instruction to the display driver. In response to the received screen-on instruction, the display driver controls the screen to turn on, for example, displays the display interface 300 in FIG. 3.

For example, the chat application simultaneously sends a speaker playback instruction to Audioservice to instruct to invoke the speaker to play the current voice message. Audioservice sends the speaker playback instruction to AudioHal, and AudioHal sends the speaker playback instruction to the audio driver. In response to the received instruction, the audio driver invokes the speaker to play the current audio data, namely, the voice content in the voice message.

That is, when the user picks up the mobile phone and listens to the voice message next to the ear, due to the false alarm of the sensor driver, the chat application disables the accidental touch prevention procedure, and consequently the mobile phone plays audio by using the speaker, which affects user experience. In addition, because the screen is already turned on when it is next to the ear, an accidental touch of the user possibly occurs.

This embodiment of this application provides the voice message playback method. The optical proximity status can be locked by using a gesture lock, to correct a remote state falsely reported by the optical proximity sensor when an algorithm detects that the mobile phone is still in a proximity state, to avoid a false alarm and improve accuracy of optical proximity reporting.

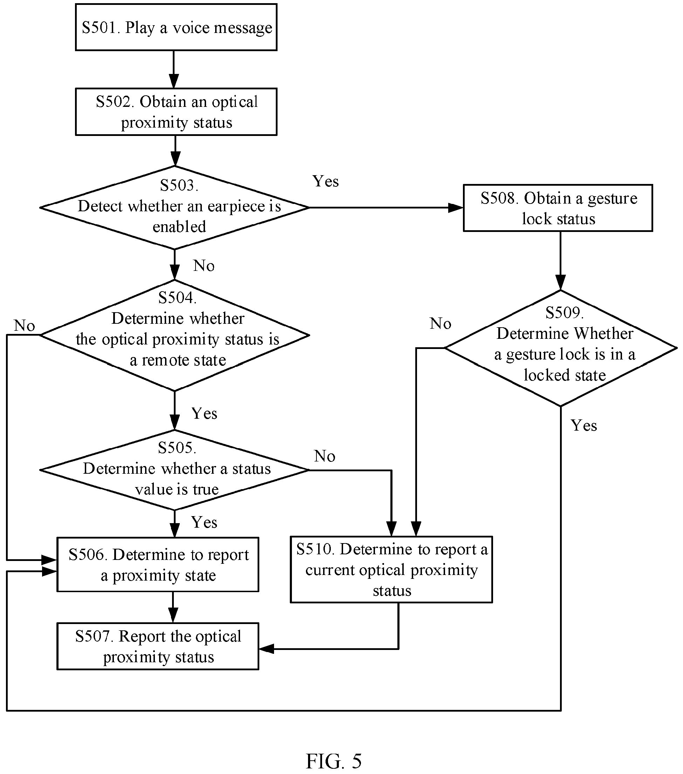

FIG. 5 is an example schematic flowchart of a voice message playback method. Referring to FIG. 5, the method specifically includes but is not limited to the following:
S501: Play a voice message.

For example, as shown in FIG. 3, the chat application receives the voice message, and displays the voice message 311 in the chat application interface. A user may tap the voice message 311 to trigger the chat application to play the voice message 311 by using the speaker. In an embodiment of this application, an example in which the speaker plays the voice message by default is used for description.

The chat application plays the voice message 311 in response to a received user operation.

S502: Obtain an optical proximity status.

For example, an optical proximity driver determines the optical proximity status based on a detection result of an optical proximity sensor. To distinguish from an optical proximity status obtained by an algorithm, in this embodiment of this application, the optical proximity status obtained by the optical proximity driver from the optical proximity sensor is referred to as an entity optical proximity status.

The optical proximity status includes a remote state or a proximity state. If the optical proximity sensor is blocked, the optical proximity status corresponds to a proximity state. If the optical proximity sensor is not blocked, the optical proximity status corresponds to a remote state.

S503: Detect whether an earpiece is enabled.

For example, the optical proximity driver obtains an earpiece status, to detect whether the earpiece is currently in an enabled state.

In an example, if the earpiece is in an enabled state, S508 is performed.

In another example, if the earpiece is in a disabled state, S504 is performed.

S504: Determine whether the optical proximity status is a remote state.

For example, the optical proximity driver determines whether the obtained entity optical proximity status is a remote state.

In an example, if the obtained entity optical proximity status is a remote state, S505 is performed.

In another example, if the obtained entity optical proximity status is a proximity state, S506 is performed.

S505: Determine whether a status value is true.

In this embodiment of this application, after the earpiece or the speaker is enabled, a gesture auxiliary algorithm obtains ACC (Accumulator, accumulator) data of a mobile phone in real time, and calculates the status value based on the ACC data. The status value is used to indicate whether the state is a proximity state. In this embodiment of this application, to distinguish from the entity optical proximity status described above, the optical proximity status obtained by the algorithm is referred to as an algorithm optical proximity status.

In an example, if the status value is true, it indicates that the algorithm optical proximity status obtained by the gesture auxiliary algorithm based on the ACC data is a proximity state. In another example, if the status value is false, it indicates that the algorithm optical proximity status obtained by the gesture auxiliary algorithm based on the ACC data is a remote state.

In this embodiment of this application, the optical proximity driver reads the status value output by the gesture auxiliary algorithm. In an example, if the status value is true, S506 is performed. In another example, if the status value is false, S507 is performed.

S506: Determine to report the proximity state.

In this embodiment of this application, the entity optical proximity status is a remote state, and the algorithm optical proximity status is a proximity state. In this case, it indicates that the entity optical proximity status is a false alarm. For example, the optical proximity sensor described above mistakenly detects a proximity state as a remote state. The optical proximity driver may correct the entity optical proximity status based on the algorithm optical proximity status, to report a correct optical proximity status.

S507: Report the optical proximity status.

For example, the optical proximity driver reports the optical proximity status to the chat application based on an acknowledged optical proximity status.

S508: Obtain a gesture lock status.

For example, the gesture auxiliary algorithm determines the gesture lock status based on the ACC data. In this embodiment of this application, the gesture lock status includes a locked state and an unlocked state. The locked state is used to lock a proximity state. To be specific, when a gesture lock is locked, each optical proximity status reported by the optical proximity driver is a proximity state. In an unlocked state, an optical proximity status reported by the optical proximity driver to the chat application is an actually detected optical proximity status, namely, the entity optical proximity status, which may include a proximity state or a remote state.

For example, the optical proximity driver reads the gesture lock status output by the gesture auxiliary algorithm.

S509: Determine whether the gesture lock is in a locked state.

In an example, if the gesture lock status is a locked state, S506 is performed.

In another example, if the gesture lock status is an unlocked state, S510 is performed.

S510: Determine to report the current optical proximity status.

For example, as described above, in an unlocked state, the optical proximity status reported by the optical proximity driver to the chat application is the actually detected optical proximity status, namely, the entity optical proximity status, which may include a proximity state or a remote state.

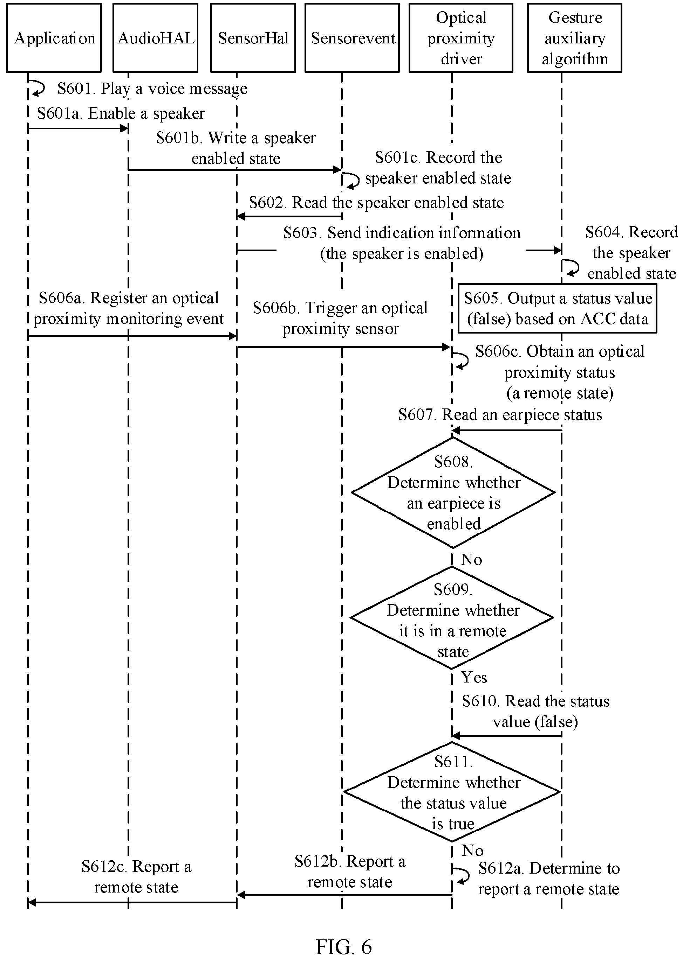

The following describes the procedure shown in FIG. 5 in detail by using a specific embodiment. FIG. 6 is an example schematic flowchart of a voice message playback method. Referring to FIG. 6, the method specifically includes but is not limited to the following steps:
S601: An application plays a voice message.

For example, as shown in FIG. 3, the chat application receives the voice message, and displays the voice message 311 in the chat application interface. The user may tap the voice message 311 to trigger the chat application to play the voice message 311 by using the speaker. In an embodiment of this application, an example in which the speaker plays the voice message by default is used for description.

For example, the chat application plays the voice message in response to the received operation of tapping the voice message 311 by the user.

S602a: The application sends a speaker enabled instruction to AudioHal.

For example, the chat application determines that the voice message needs to be played. As shown in FIG. 4C, the chat application sends a speaker playback instruction to Audioservice to instruct to invoke the speaker to play a current voice message. Audioservice sends the speaker playback instruction to AudioHal, and AudioHal sends the speaker playback instruction to an audio driver. In response to the received instruction, the audio driver invokes the speaker to play current audio data, namely, voice content in the voice message. A display screen is in a screen-on state.

S602b: AudioHal sends, to Sensorevent, an instruction for writing a speaker enabled state.

For example, after AudioHal indicates that the speaker is enabled, it may be determined that the speaker is currently in an enabled state. AudioHal sends, to Sensorevent, the instruction for writing the speaker enabled state, to instruct Sensorevent to record that the speaker is currently in an enabled state.

S602c: Sensorevnet records the speaker enabled state.

For example, in response to the received instruction for writing the speaker enabled state, Sensorevent records that the speaker is currently in an enabled state. For example, Sensorevent may be set with a flag bit corresponding to a speaker status, where "1" indicates enabled and "0" indicates disabled. Before Sensorevent receives the speaker enabled instruction, the flag bit of the speaker status is "0", that is, the speaker status is a disabled state. Sensorevent switches the flag bit to "1" in response to the received instruction for writing the speaker enabled state, to instruct that the speaker is enabled.

S602: SenSorHal reads the speaker enabled state.

For example, SensorHal reads data in Sensorevent in real time to obtain the earpiece status and the speaker status (including enabled or disabled). In this instance, after Sensorevent records the speaker enabled state, SensorHal may detect speaker status switching recorded in Sensorevnet, that is, switching from a disabled state to an enabled state.

S603: SensorHal sends indication information to a gesture auxiliary algorithm.

For example, after detecting that the speaker status is switched from disabled to enabled, SenSorHal sends the indication information to the gesture auxiliary algorithm, and the indication information includes speaker enabled state information, and is used to indicate that the speaker is enabled.

It should be noted that, in this embodiment of this application, when detecting that the speaker status and/or the earpiece status is switched, SensorHal triggers the indication information. That is, after SensorHal currently sends the indication information, when the speaker status and the earpiece status are unchanged, for example, the earpiece is always in a disabled state currently, and the speaker is always in an enabled state, SensorHal does not send the indication information to the gesture auxiliary algorithm.

S604: The gesture auxiliary algorithm records the speaker enabled state.

For example, the gesture auxiliary algorithm determines, in response to the received indication information, that the speaker is currently in an enabled state. The gesture auxiliary algorithm may record that the speaker status is an enabled state. Optionally, the gesture auxiliary algorithm may also be set with flag bits to record the speaker status and the earpiece status. For a recording manner, refer to that of Sensorevent. Details are not described herein again.

S605: The gesture auxiliary algorithm outputs a status value based on ACC data.

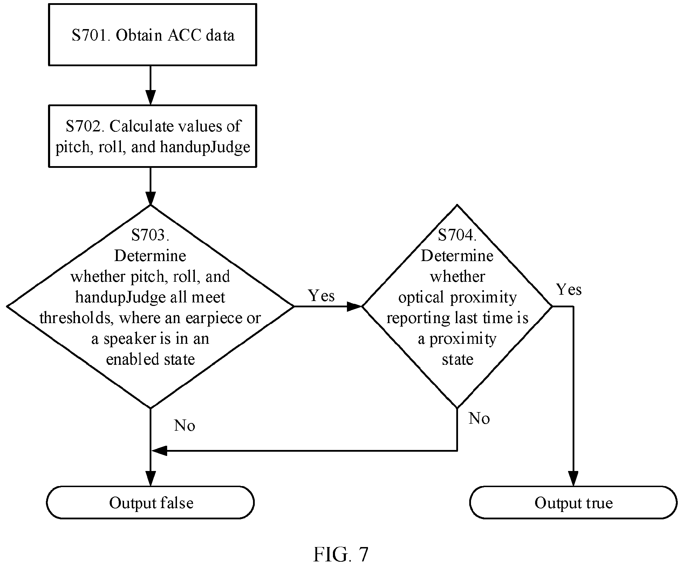

For example, FIG. 7 shows an example procedure of calculating a status value of a gesture auxiliary algorithm. Referring to FIG. 7, the procedure specifically includes but is not limited to the following:
S701: Obtain ACC data.

For example, the gesture auxiliary algorithm may send request information to a sensor driver to request the ACC data. The sensor driver obtains detection data of an acceleration sensor, a gyroscope sensor, and the like in response to a request of the gesture auxiliary algorithm. Optionally, the acceleration sensor and the gyroscope sensor may be always enabled, or may be started in response to invoking of the sensor driver. This is not limited in this application.

S702: Calculate values of pitch (a pitch angle), roll (a roll angle), and handupJudge (handup judge).

For example, pitch (the pitch angle) and roll (the roll angle) may be used to describe a posture of the mobile phone. The value of handupJudge is used to describe a dynamic-to-static or static-to-dynamic process variable of the mobile phone. For a specific calculation manner, refer to the conventional technology. Details are not described in this application.

S703: Determine whether pitch, roll, and handupJudge meet thresholds, where the earpiece or the speaker is in an enabled state.

For example, the gesture auxiliary algorithm is based on the calculated pitch, roll, and handupJudge, which are compared with respective corresponding threshold ranges. If pitch, roll, and handupJudge each meet the threshold ranges, for example, pitch and roll meet a threshold range corresponding to holding the mobile phone in left hand or a threshold range corresponding to holding the mobile phone in right hand. In addition, handupJudge is greater than 0, and it is further determined whether the earpiece or the speaker is in an enabled state. As described above, the gesture auxiliary algorithm may record the speaker status and/or the earpiece status, and the gesture auxiliary algorithm may determine, based on the recorded status, whether the earpiece or the speaker is enabled. If the foregoing conditions are all met, S704 is performed. If any condition is not met, the status value is output as false.

S704: Determine whether an optical proximity reporting status last time is a proximity state.

For example, the gesture auxiliary algorithm may read a proximity state reported last time by the optical proximity driver, which refers to an optical proximity status actually reported by the optical proximity driver to the chat application.

In an example, if the optical proximity reporting status is a proximity state, the status value is output as true.

In another example, if the optical proximity reporting status is a remote state, the status value is output as false.

Still referring to FIG. 6, in this example, the user currently holds the mobile phone, that is, the mobile phone is in a remote state. Correspondingly, none of pitch, roll, and handupJudge obtained by the gesture auxiliary algorithm based on the ACC data meets the threshold. In this case, the status value is output as false, which is used to indicate that the algorithm optical proximity status is a remote state.

S606a: The application registers an optical proximity monitoring event with SensorHal.

For example, while the application performs S601a (or there is no sequence), the chat application sends a registration and monitoring optical proximity request to Sensorservice. Sensorservice sends an activate message to SensorHal in response to the received registration and monitoring optical proximity request.

S606b: SensorHal sends an instruction for triggering the optical proximity sensor to the optical proximity driver.

For example, SensorHal sends the instruction for triggering the optical proximity sensor to the optical proximity driver in response to the received activate message, to indicate that the sensor driver (which may be specifically the optical proximity driver) triggers (that is, starts) the optical proximity sensor.

S606c: The optical proximity driver obtains the optical proximity status.

For example, as shown in FIG. 4A, the user currently holds the mobile phone, that is, the optical proximity driver determines, based on the parameter detected by the optical proximity sensor, that the mobile phone is in a remote state.

S607: The optical proximity driver reads the earpiece status.

For example, as described above, the gesture auxiliary records the earpiece status and the speaker status. A current earpiece status recorded by the gesture auxiliary is a disabled state. That is, by default, the gesture auxiliary algorithm records that both the speaker status and the earpiece status are disabled. For example, in S604, the gesture auxiliary algorithm records that the speaker is in an enabled state, and the earpiece status is still disabled.

The optical proximity driver may read the earpiece status and the speaker status that are recorded by the gesture auxiliary algorithm, and obtain the current earpiece status.

S608: The optical proximity driver determines whether the earpiece is enabled.

For example, the optical proximity driver determines, based on the earpiece status read from the gesture auxiliary algorithm, whether the earpiece is in an enabled state.

In S503 shown in FIG. 5, if the earpiece is enabled, S508 is performed; or if the earpiece is disabled, S504 is performed.

In this instance, the optical proximity driver detects that the earpiece is in a disabled state, and S609 is performed.

S609: The optical proximity driver determines whether it is in a remote state.

For example, the optical proximity driver performs determining based on an entity optical proximity status obtained in S606c. As shown in S504 in FIG. 5, if a determining result is yes, S505 is performed; or if a determining result is no, S506 is performed.

As shown in FIG. 6, in this example, the entity optical proximity status obtained by the optical proximity driver in S606c is a remote state, the optical proximity driver determines that a current state is a remote state (that is, the determining result is yes), and S610 is performed.

S610: The optical proximity driver reads the status value from the gesture auxiliary algorithm.

For example, that the procedure in FIG. 5 goes to S505 corresponds to that the optical proximity driver reads the status value from the gesture auxiliary algorithm in FIG. 6. It should be noted that the gesture auxiliary algorithm continuously calculates and outputs status values after S603 until the speaker and the earpiece are disabled. The status value read by the optical proximity driver is a latest output status value calculated by the gesture auxiliary algorithm. Optionally, the gesture auxiliary algorithm may also set a calculation period, and the calculation period of the gesture auxiliary algorithm may be the same as a reading period of the optical proximity driver. This is not limited in this application.

S611: The optical proximity driver determines whether the status value is true.

For example, in S505 in FIG. 5, if a determining result is yes, S506 is performed; or if a determining result is no, S510 is performed. As shown in FIG. 6, the status value read by the optical proximity driver is false. Correspondingly, the procedure in FIG. 5 goes to S510.

S612a: The optical proximity driver determines to report a remote state.

For example, as shown in S510 in FIG. 5, optical proximity reports a current entity optical proximity status. That is, both the algorithm optical proximity status and the entity optical proximity status are a remote state.

S612b: The optical proximity driver reports a remote state to SensorHal.

S612c: SensorHal reports a remote state to the application.

For example, referring to FIG. 4B, the optical proximity driver determines to report a remote state to SensorHal. SensorHal reports a remote state to Sensorservice. Sensorservice sends a remote state to the chat application.

The chat application determines that it is currently in a remote state, and in this case, the screen continues to be turned on, and the voice message is played by using the speaker, that is, a current voice message playback manner is retained.

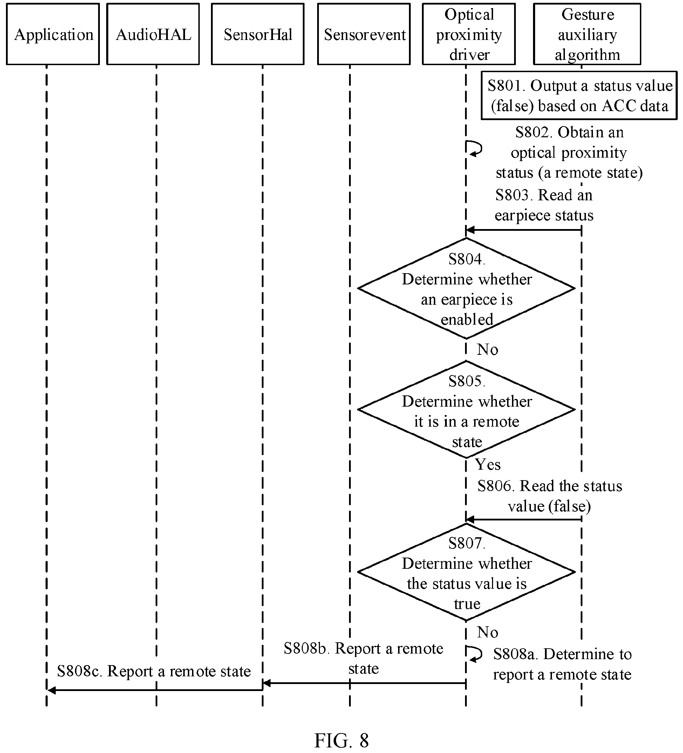

For example, in a voice playback process, the user continues to hold the mobile phone in a remote state. In this process, each module cyclically performs the procedure in FIG. 5. FIG. 8 is an example schematic flowchart of a voice message playback method. Referring to FIG. 8, the method specifically includes but is not limited to the following steps:
S801: A gesture auxiliary algorithm outputs a status value based on ACC data.

For example, as described above, the gesture auxiliary algorithm continuously obtains the ACC data, and calculates a corresponding status value. In this example, because the mobile phone is in a remote state, a calculation result in FIG. 7 is still false.

S802: The optical proximity driver obtains the optical proximity status.

For example, as shown in FIG. 4A, the user currently holds the mobile phone, that is, the optical proximity driver determines, based on the parameter detected by the optical proximity sensor, that the mobile phone is in a remote state.

S803: The optical proximity driver reads the earpiece status.

For example, as described above, the gesture auxiliary records the earpiece status and the speaker status. A current earpiece status recorded by the gesture auxiliary is a disabled state. That is, by default, the gesture auxiliary algorithm records that both the speaker status and the earpiece status are disabled. The gesture auxiliary algorithm records that the speaker is in an enabled state, and the earpiece status is still disabled.

The optical proximity driver may read the earpiece status and the speaker status that are recorded by the gesture auxiliary algorithm, and obtain the current earpiece status.

S804: The optical proximity driver determines whether the earpiece is enabled.

For example, the optical proximity driver determines, based on the earpiece status read from the gesture auxiliary algorithm, whether the earpiece is in an enabled state.

As shown in S503 in FIG. 5, if the earpiece is enabled, S508 is performed; or if the earpiece is disabled, S504 is performed.

In this instance, the optical proximity driver detects that the earpiece is in a disabled state, and S805 is performed.

S805: The optical proximity driver determines whether it is in a remote state.

For example, the optical proximity driver performs determining based on an entity optical proximity status obtained in S802. As shown in S504 in FIG. 5, if a determining result is yes, S505 is performed; or if a determining result is no, S506 is performed.

As shown in FIG. 8, in this example, the entity optical proximity status obtained by the optical proximity driver in S802 is a remote state, the optical proximity driver determines that a current state is a remote state, and S806 is performed.

S806: The optical proximity driver reads the status value from the gesture auxiliary algorithm.

For example, that the procedure in FIG. 5 goes to S505 corresponds to that the optical proximity driver reads the status value from the gesture auxiliary algorithm in FIG. 6. It should be noted that the gesture auxiliary algorithm continuously calculates and outputs status values after the speaker is enabled until the speaker and the earpiece are disabled. The status value read by the optical proximity driver is a latest output status value calculated by the gesture auxiliary algorithm. Optionally, the gesture auxiliary algorithm may also set a calculation period, and the calculation period of the gesture auxiliary algorithm may be the same as a reading period of the optical proximity driver. This is not limited in this application.

S807: The optical proximity driver determines whether the status value is true.

For example, in S505 in FIG. 5, if a determining result is yes, S506 is performed; or if a determining result is no, S510 is performed. As shown in FIG. 8, the status value read by the optical proximity driver is false. Correspondingly, the procedure in FIG. 5 goes to S510.

S808a: The optical proximity driver determines to report a remote state.

For example, as shown in S510 in FIG. 5, optical proximity reports a current entity optical proximity status. That is, both the algorithm optical proximity status and the entity optical proximity status are a remote state.

S808b: The optical proximity driver reports a remote state to SensorHal.

S808c: SensorHal reports a remote state to the application.

For example, referring to FIG. 4B, the optical proximity driver determines to report a remote state to SensorHal. SensorHal reports a remote state to Sensorservice. Sensorservice sends a remote state to the chat application.

The chat application determines that it is currently in a remote state, and in this case, the screen continues to be turned on, and the voice message is played by using the speaker, that is, a current voice message playback manner is retained.

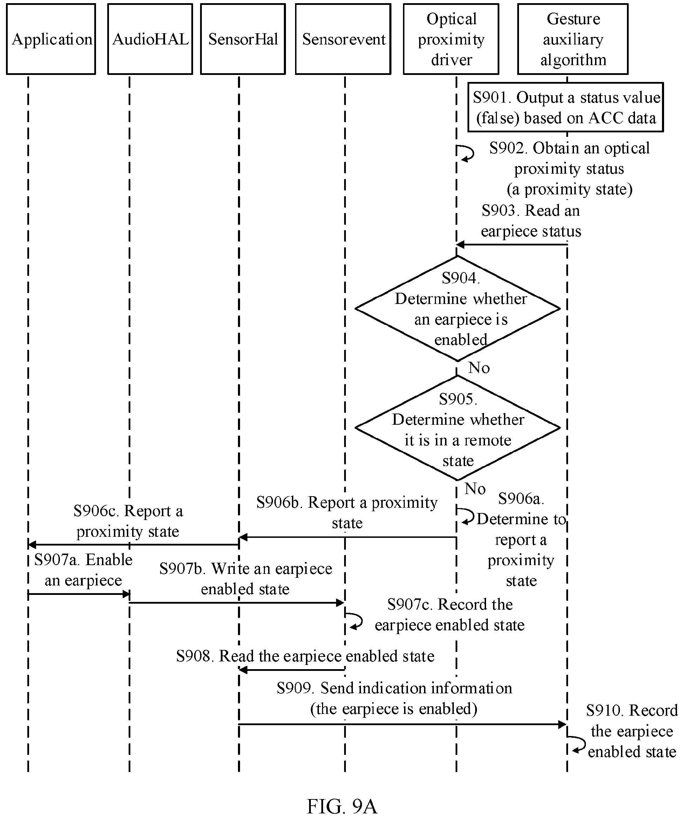

For example, the user switches from a listening manner shown in FIG. 4A to a listening manner shown in FIG. 4B, that is, the user puts the mobile phone next to an ear to listen to the voice message. FIG. 9A~FIG. 9B are example schematic flowcharts of a voice message playback method. Referring to FIG. 9A~FIG. 9B, the method specifically includes but is not limited to the following:
S901: A gesture auxiliary algorithm outputs a status value based on ACC data.

For example, as described above, the gesture auxiliary algorithm continuously obtains the ACC data, and calculates a corresponding status value. In this example, because the user puts the mobile phone next to the ear for listening, when the gesture auxiliary algorithm performs S703, the determining result is yes, that is, each parameter meets a threshold, and the speaker is in an enabled state.

In this example, because the optical proximity driver has not reported a proximity state yet, when S704 is performed, the optical proximity driver determines that the optical proximity driver reports a remote state last time, and an output status value is still false.

S902: The optical proximity driver obtains the optical proximity status.

For example, the user puts the mobile phone next to the ear, and correspondingly, the optical proximity driver determines, based on the detection result of the optical proximity sensor, that a current optical proximity status is a proximity state.

S903: The optical proximity driver reads the earpiece status.

For example, as described above, the gesture auxiliary records the earpiece status and the speaker status. A current earpiece status recorded by the gesture auxiliary is a disabled state. That is, by default, the gesture auxiliary algorithm records that both the speaker status and the earpiece status are disabled. The gesture auxiliary algorithm records that the speaker is in an enabled state, and the earpiece status is still disabled.

The optical proximity driver may read the earpiece status and the speaker status that are recorded by the gesture auxiliary algorithm, and obtain the current earpiece status.

S904: The optical proximity driver determines whether the earpiece is enabled.

For example, the optical proximity driver determines, based on the earpiece status read from the gesture auxiliary algorithm, whether the earpiece is in an enabled state.

As shown in S503 in FIG. 5, if the earpiece is enabled, S508 is performed; or if the earpiece is disabled, S504 is performed.

In this instance, the optical proximity driver detects that the earpiece is in a disabled state, and S905 is performed.

S905: The optical proximity driver determines whether it is in a remote state.

For example, the optical proximity driver performs determining based on an entity optical proximity status obtained in S902. As shown in S504 in FIG. 5, if a determining result is yes, S505 is performed; or if a determining result is no, S506 is performed.

As shown in FIG. 8, in this example, the entity optical proximity status obtained by the optical proximity driver in S902 is a proximity state, the optical proximity driver determines that a current state is a remote state (that is, the determining result is no), and S906a is performed. That is, corresponding to FIG. 5, the procedure goes to S506.

S906a: The optical proximity driver determines to report a proximity state.

For example, when the optical proximity driver determines that it is currently in a remote state, there is no need to read the algorithm optical proximity status, and a proximity state may be directly reported.

S906b: The optical proximity driver reports a proximity state to SensorHal.

S906c: SensorHal reports a proximity state to the application.

For example, referring to FIG. 4B, the optical proximity driver determines to report a proximity state to SensorHal. SensorHal reports a proximity state to Sensorservice. Sensorservice sends a proximity state to the chat application.

S907a: The application sends an earpiece enabled instruction to AudioHal.

For example, as shown in FIG. 4B, the earpiece playback instruction is sent to Audioservice to instruct to invoke the earpiece to play a current voice message. Audioservice sends the earpiece playback instruction to AudioHal, and AudioHal sends the earpiece playback instruction to the audio driver. In response to the received instruction, the audio driver invokes the earpiece (namely, the receiver shown in FIG. 1) to play current audio data, namely, voice content in the voice message.

In addition, the chat application sends an indication message to a PoserManager (power management) module, to indicate to start a screen-off procedure. The PoserManager module sends a screen-off instruction to a hardware composer (Hardware Composer, HWC). The HWC sends the screen-off instruction to a display driver. The display driver controls, in response to the received screen-off instruction, a display screen to turn off.

S907b: AudioHal sends, to Sensorevent, an instruction for writing an earpiece enabled state.

For example, after AudioHal indicates that the earpiece is enabled, it may be determined that the earpiece is currently in an enabled state. AudioHal sends, to Sensorevent, the instruction for writing the earpiece enabled state, to instruct Sensorevent to record that the earpiece is currently in an enabled state. It should be noted that, before a speaker disabled instruction is received, the speaker status recorded by Sensorevent and the gesture auxiliary algorithm is still an enabled state.

S907c: Sensorevnet records the earpiece enabled state.

For example, in response to the received instruction for writing the earpiece enabled state, Sensorevent records that the earpiece is currently in an enabled state. For example, Sensorevent may be set with a flag bit corresponding to an earpiece status, where "1" indicates enabled and "0" indicates disabled. Before Sensorevent receives the earpiece enabled instruction, the flag bit of the speaker status is "0", that is, the speaker status is a disabled state. Sensorevent switches the flag bit to "1" in response to the received instruction for writing the earpiece enabled state, to indicate that the earpiece is enabled.

S908: SensorHal reads the earpiece enabled state.

For example, SensorHal reads data in Sensorevent in real time to obtain the earpiece status and the speaker status (including enabled or disabled). In this instance, after Sensorevent records the earpiece enabled state, SensorHal may detect earpiece status switching recorded in Sensorevnet, that is, switching from a disabled state to an enabled state.

S909: SensorHal sends indication information to the gesture auxiliary algorithm.

For example, after detecting that the earpiece status is switched from disabled to enabled, SenSorHal sends the indication information to the gesture auxiliary algorithm, and the indication information includes earpiece enabled state information, and is used to indicate that the earpiece is in an enabled state.

It should be noted that, in this embodiment of this application, when detecting that the speaker status and/or the earpiece status is switched, SensorHal triggers the indication information. That is, after SensorHal currently sends the indication information, when the speaker status and the earpiece status are unchanged, for example, the earpiece is always in a disabled state currently, and the speaker is always in an enabled state, SensorHal does not send the indication information to the gesture auxiliary algorithm.

S910: The gesture auxiliary algorithm records the earpiece enabled state.

For example, the gesture auxiliary algorithm determines, in response to the received indication information, that the earpiece is currently in an enabled state. The gesture auxiliary algorithm may record that the earpiece status is an enabled state. Optionally, the gesture auxiliary algorithm may also be set with flag bits to record the speaker status and the earpiece status. For a recording manner, refer to that of Sensorevent. Details are not described herein again.

S911a: The gesture auxiliary algorithm outputs a status value based on ACC data.

Still referring to FIG. 7, for example, as described above, the gesture auxiliary algorithm continuously obtains the ACC data, and calculates a corresponding status value. In this example, because the user puts the mobile phone next to the ear for listening, when the gesture auxiliary algorithm performs S703, the determining result is yes, that is, each parameter meets a threshold, and the speaker is in an enabled state.

In this example, because the optical proximity driver has reported a proximity state (that is, S906a~S906c), when S704 is performed, the optical proximity driver determines that the optical proximity driver reports a proximity state last time, and an output status value is true. That is, an algorithm optical proximity status calculated by the gesture auxiliary algorithm is a proximity state.

S911b: The gesture auxiliary algorithm outputs a gesture lock status based on the ACC data.

For example, after the speaker is enabled, the gesture auxiliary algorithm continuously obtains the ACC data. In the procedure described above, the gesture auxiliary algorithm may calculate only the status value. Optionally, the gesture auxiliary algorithm may alternatively calculate both the status value and a gesture lock. This is not limited in this application.

In this instance, after detecting that the earpiece is enabled, the gesture auxiliary algorithm may start to calculate a gesture lock status value. Optionally, the gesture auxiliary algorithm may alternatively calculate the gesture lock status value when the optical proximity driver needs to read the gesture lock status value (that is, when S915 is performed). This is not limited in this application.

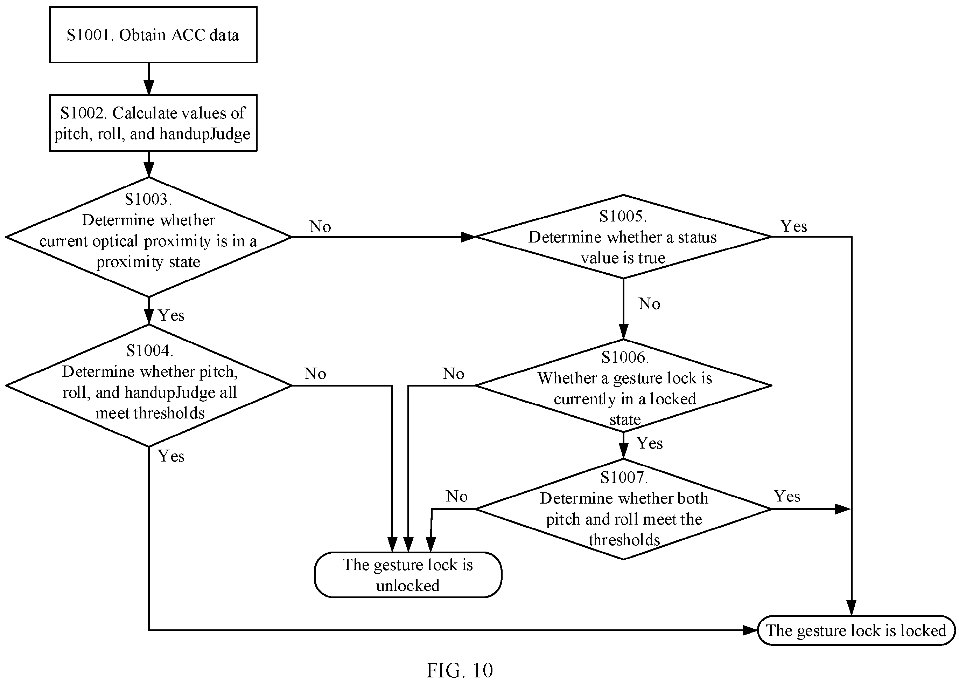

FIG. 10 is an example schematic diagram of a procedure of calculating a gesture lock. Referring to FIG. 10, the procedure specifically includes but is not limited to the following steps:
S1001: Obtain ACC data.
S1002: Calculate values of pitch, roll, and handupJudge.

For example, as described above, the gesture auxiliary algorithm obtains the ACC data in real time, and calculates corresponding values of pitch, roll, and handupJudge.

In a possible implementation, the gesture auxiliary algorithm may output a status value and a mobile phone lock status value based on pitch, roll, and handupJudge.

In another possible implementation, the gesture auxiliary algorithm may perform a corresponding determining procedure based on calculation results of the values of pitch, roll, and handupJudge when an optical proximity driver performs invoking, to output a status value and/or a mobile phone lock status value.

In this embodiment of this application, an example in which the gesture auxiliary algorithm continuously obtains gesture lock statuses after detecting that an earpiece is enabled is used for description.

S1003: Determine whether current optical proximity is in a proximity state.

For example, the gesture auxiliary algorithm obtains whether an entity optical proximity status obtained by the optical proximity driver is a proximity state.

In an example, if it is a proximity state, S1004 is performed.

In another example, if it is a remote state, S1005 is performed.

S1004: Determine whether pitch, roll, and handupJudge meet thresholds.

For a specific procedure, refer to S703. Details are not described herein again.

In an example, if pitch, roll, and handupJudge all meet the thresholds, the gesture lock is locked, that is, an output gesture lock status is locked.

In another example, if none of pitch, roll, and handupJudge meets the thresholds, the gesture lock is unlocked, that is, an output gesture lock status is unlocked.

S1005: Determine whether the status value is true.

For example, the gesture auxiliary algorithm may perform the procedure in FIG. 7 to obtain the status value.

In an example, if the status value is true, the gesture lock is locked, that is, an output gesture lock status is locked.

In another example, if the status value is false, S1006 is performed.

S1006: Determine whether the gesture lock is currently in a locked state.

For example, the gesture auxiliary algorithm detects whether the gesture lock (namely, an output result of a previous gesture lock determining procedure) is currently in a locked state.

In an example, if a determining result is yes, S100,7 is performed.

In another example, if a determining result is no, that is, the gesture lock is unlocked, an unlocked state continues to be retained.

S1007: Determine whether pitch and roll meet the thresholds.

In an example, if both pitch and roll meet the thresholds, the gesture lock is locked, that is, an output gesture lock status is locked.

In another example, if neither pitch nor roll meets the thresholds, the gesture lock is unlocked, that is, an output gesture lock status is unlocked.

Still referring to FIG. 9A, in this example, the user puts the mobile phone next to the ear for listening, and the gesture auxiliary algorithm performs the procedure shown in FIG. 10. Specifically, the gesture auxiliary algorithm performs S1003 to determine that the current optical proximity status is a proximity state, and then performs S1004. As described above, the gesture auxiliary algorithm obtains and calculates values of pitch, roll, and handupJudge in real time. Correspondingly, after the user raises a hand, the gesture auxiliary algorithm may determine, based on pitch, roll, and handupJudge that have been obtained (that is, obtained before the earpiece is enabled), that a next-to-ear listening condition is met, that is, the determining result is yes in S1004, the gesture lock is locked, and the optical proximity status is locked to a proximity state. When the user puts the mobile phone next to the ear for listening, pitch and roll change from previous values of pitch and roll, and meet a right-hand listening threshold range or a left-hand listening threshold range. In addition, because the user puts the mobile phone next to the ear from a remote state, and the mobile phone moves from a remote location to proximity of the ear, a value of handupJudge is greater than 0, that is, a preset threshold is met.

S912: The optical proximity driver obtains the optical proximity status.

For example, as shown in 4B, the user currently holds the mobile phone next to the ear for listening, that is, the optical proximity driver determines, based on a parameter detected by an optical proximity sensor, that the mobile phone is in a proximity state.

S913: The optical proximity driver reads an earpiece status from the gesture auxiliary algorithm.

For example, as described above, the gesture auxiliary records the earpiece status and the speaker status. A current earpiece status recorded by the gesture auxiliary record is a disabled state. That is, by default, the gesture auxiliary algorithm records that both the speaker status and the earpiece status are disabled. The gesture auxiliary algorithm records that the speaker is in an enabled state, and the earpiece status is still disabled.

The optical proximity driver may read the earpiece status and the speaker status that are recorded by the gesture auxiliary algorithm, and obtain the current earpiece status.

S914: The optical proximity driver determines whether the earpiece is enabled.

For example, the optical proximity driver determines, based on the earpiece status read from the gesture auxiliary algorithm, whether the earpiece is in an enabled state.

As shown in S503 in FIG. 5, if the earpiece is enabled, S508 is performed; or if the earpiece is disabled, S504 is performed.

In this instance, the optical proximity driver detects that the earpiece is in an enabled state, and S914 is performed. Correspondingly, the procedure in FIG. 5 goes to S508.

S915: The optical proximity driver reads a gesture lock status value.

For example, corresponding to S508 in FIG. 5, if it is determined that a gesture lock status is a locked state, S506 is performed; or if the gesture lock status is an unlocked state, S510 is performed.

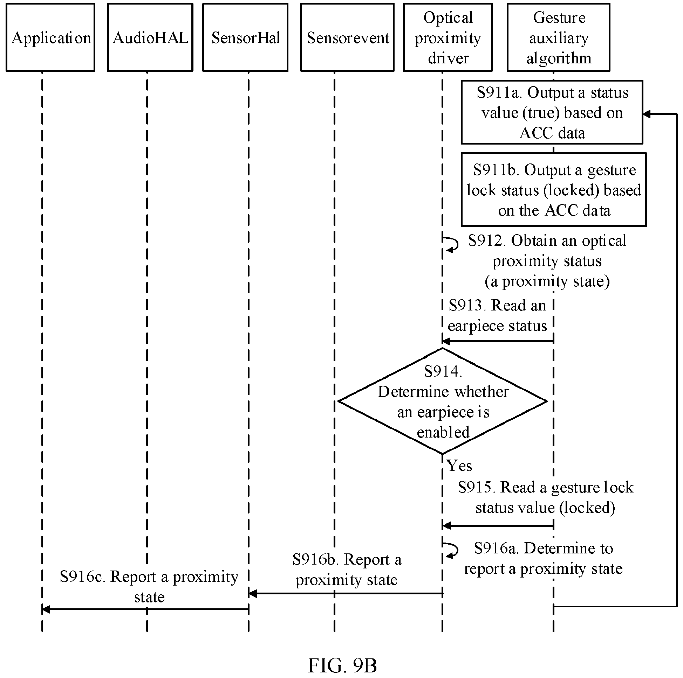

Still referring to FIG. 9B, for example, as described above, the gesture auxiliary algorithm goes through the procedure shown in FIG. 10, and outputs the gesture lock status as a locked state, that is, optical proximity is locked to a proximity state.

S916a: The optical proximity driver determines to report a proximity state.

For example, as described above, in a locked state of the gesture lock, the optical proximity status is locked to a proximity state. That is, regardless of whether the entity optical proximity status obtained by the optical proximity driver is a proximity state or a remote state, an optical proximity status reported by the optical proximity driver to the chat application is a proximity state.

S916b: The optical proximity driver reports a proximity state to SensorHal.

S916c: SensorHal reports a proximity state to the application.

For example, referring to FIG. 4B, the optical proximity driver determines to report a proximity state to SensorHal. SensorHal reports a proximity state to Sensorservice. Sensorservice sends a proximity state to the chat application.

In a process in which the user listens to a voice message next to an ear, each module repeatedly performs S911a~S916c, so that the mobile phone is continuously in a screen-off state, and plays the voice message by using the earpiece.

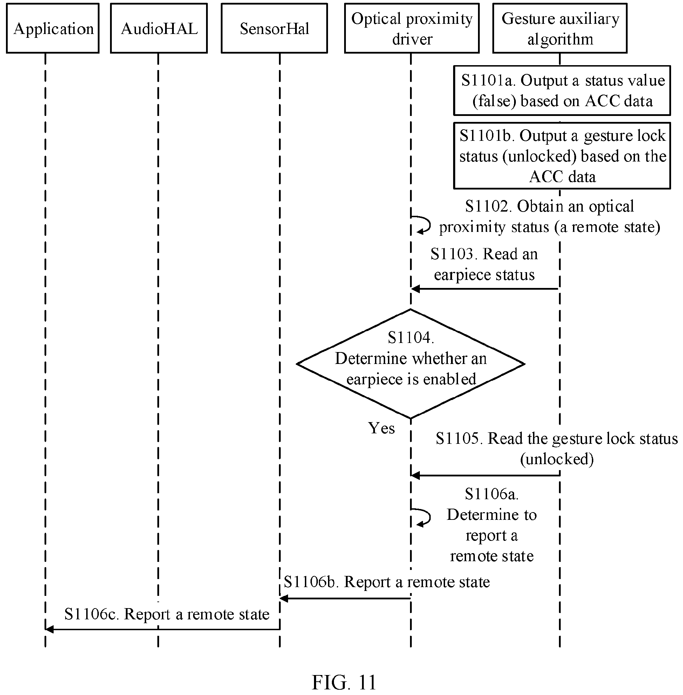

In this embodiment of this application, after the user puts the mobile phone next to the ear for listening, the mobile phone enters an accidental touch prevention mode, that is, turns off a screen, and plays the voice message by using the earpiece. In some scenarios, if the user puts the mobile phone down from the ear, the mobile phone disables the accidental touch prevention mode, that is, turns on the screen, and continues to play the voice message by using the speaker. FIG. 11 is an example schematic flowchart of a voice playback method. Referring to FIG. 11, the method specifically includes but is not limited to the following:
S1101a: A gesture auxiliary algorithm outputs a status value based on ACC data.

For example, after the user takes the mobile phone away from the ear, none of pitch, roll, and handupJudge that are calculated by the gesture auxiliary algorithm meets the thresholds. Correspondingly, in the procedure shown in FIG. 7, the gesture auxiliary algorithm outputs false.

S1001b: The gesture auxiliary algorithm outputs a gesture lock status based on the ACC data.

For example, in the procedure shown in FIG. 10, the gesture auxiliary algorithm performs S1003. Due to impact of device performance or a reporting period of the optical proximity driver, after the user takes the mobile phone away from the ear, the optical proximity driver possibly has not obtained a remote state yet. Correspondingly, the gesture auxiliary algorithm determines that a current optical proximity status is a remote state, and performs S1005. For example, the gesture auxiliary algorithm obtains a status value. As described above, the status value is determined as false. The gesture auxiliary algorithm continues to perform S1006. If the gesture auxiliary algorithm is currently in a locked state, S1007 is performed. Correspondingly, the gesture auxiliary algorithm determines, based on pitch, roll, and handupJudge, that no threshold is met, and in this case, a locked state is released, that is, the gesture lock status is output as an unlocked state.

S1002: The optical proximity driver obtains the optical proximity status.

For example, the optical proximity driver obtains that the entity optical proximity status is a remote state.

S1003: The optical proximity driver reads an earpiece status from the gesture auxiliary algorithm.

For example, a current earpiece status recorded by the gesture auxiliary record is an enabled state. The optical proximity driver reads that the earpiece is in an enabled state.

S1104: The optical proximity driver determines whether the earpiece is enabled.

S1105: The optical proximity driver reads the gesture lock status from the gesture auxiliary algorithm.

S1106a: The optical proximity driver determines to report a remote state.

For example, in the procedure shown in FIG. 5, the optical proximity driver determines that the earpiece is enabled, and an obtained gesture lock status is unlocked. The procedure goes to S510. The optical proximity driver may determine to report a currently obtained entity optical proximity status, that is, a remote state.

S1106b: The optical proximity driver reports a remote state to SensorHal.

S1106c: SensorHal reports a remote state to the application.

Correspondingly, in response to the received remote state, the chat application may start from S601a in FIG. 6, that is, enable the speaker, to continue to play the voice message by using the speaker, and the screen is turned on.

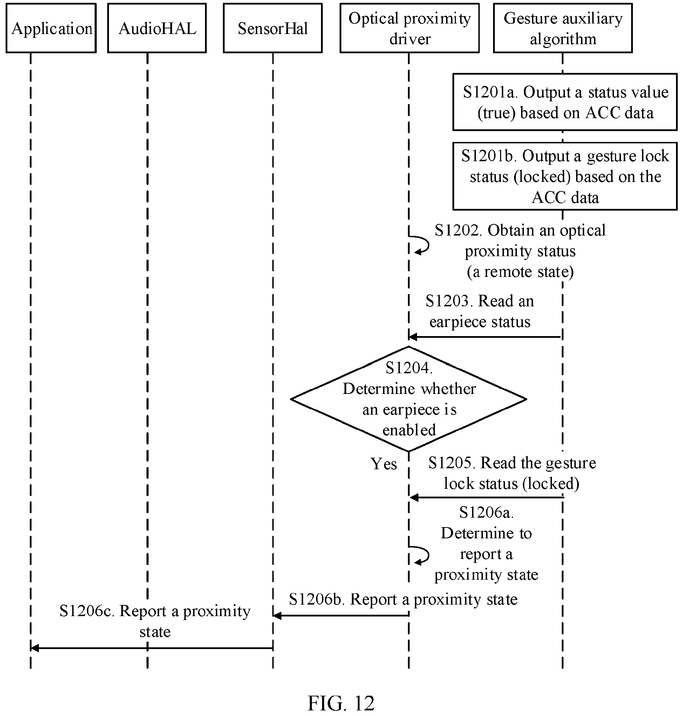

For example, as described above, abnormal reporting possibly occurs on the optical proximity driver, that is, when the user listens to the voice message next to the ear, the optical proximity sensor mistakenly detects a remote state. In this scenario, the optical proximity driver may correct, based on the gesture lock status from the gesture auxiliary algorithm, an entity optical proximity detection result of the optical proximity driver, to report a correct proximity state to the chat application, and avoid a false alarm. FIG. 12 is an example schematic diagram of a procedure of voice message playback. Referring to FIG. 12, the procedure specifically includes but is not limited to the following steps:
S1201a: A gesture auxiliary algorithm outputs a status value based on ACC data.

For example, the gesture auxiliary algorithm performs the procedure in FIG. 7. In this example, the gesture auxiliary algorithm determines, based on calculated values of pitch, roll, and handupJudge, that the thresholds are met, and the earpiece and the speaker are in an enabled state. A determining result of the gesture auxiliary algorithm is yes, and S704 is performed. In this example, because the optical proximity driver reports a false alarm this time, and a previous report is still a proximity state, correspondingly, the gesture auxiliary algorithm determines that a previously reported optical proximity status is a proximity state. A determining result is yes, and the status value is output as true.

S1201b: The gesture auxiliary algorithm outputs a gesture lock status based on the ACC data.

For example, the gesture auxiliary algorithm performs the procedure in FIG. 10 based on the ACC data. Referring to FIG. 10, the gesture auxiliary algorithm performs S1003. In an example, S1202 is possibly performed before S1201b is performed, that is, the optical proximity driver has obtained that a current entity proximity state is a remote state (namely, a mistakenly detected state). Correspondingly, the gesture auxiliary algorithm performs S1003. A determining result is no, and S1005 continues to be performed. The gesture auxiliary algorithm may obtain that the status value (namely, a value calculated in S1201a) is output as true. The gesture auxiliary algorithm determines that the gesture lock is locked.

In another example, due to impact of device performance or a reporting period of the optical proximity driver, the optical proximity driver possibly has not obtained the entity optical proximity status yet, and the current optical proximity status is still a proximity state. Correspondingly, the gesture auxiliary algorithm performs S1004, determines, based on pitch and roll, that the thresholds are met, and further determines that the gesture lock is locked.

It should be noted that in this embodiment of this application, after the gesture lock is locked, that is, in a process in which the user listens next to the ear, because acceleration of the mobile phone does not change, handupJudge is possibly always 0. Correspondingly, in this scenario, when performing a status value determining procedure and a gesture lock status determining procedure, the gesture auxiliary algorithm may not consider handupJudge. For example, when S1004 is performed, only pitch and roll may be determined, and there is no need to further determine handupJudge.

S1202: The optical proximity driver obtains the optical proximity status.

For example, in this instance, an example in which the optical proximity driver obtains an abnormal state, that is, it is actually a proximity state but the optical proximity driver obtains a remote state is used for description.

S1203: The optical proximity driver reads an earpiece status from the gesture auxiliary algorithm.

For example, a current earpiece status recorded by the gesture auxiliary is an enabled state. The optical proximity driver reads that the earpiece is in an enabled state.

S1204: The optical proximity driver determines whether the earpiece is enabled.

S1205: The optical proximity driver reads the gesture lock status from the gesture auxiliary algorithm.

S1206a: The optical proximity driver determines to report a proximity state.

For example, in the procedure shown in FIG. 5, the optical proximity driver determines that the earpiece is enabled, and an obtained gesture lock status is locked. The procedure goes to S506. The optical proximity driver may determine to report a proximity state. That is, although the entity optical proximity status obtained by the optical proximity driver is a remote state, because the gesture lock locks a proximity state, correspondingly, for the optical proximity status, when it is detected that the gesture lock is locked, a remote state that is originally to be reported is updated to a proximity state, to correct mistaken detection of the optical proximity status in a timely manner, and avoid a problem that the mobile phone plays next to the ear of the user by using the speaker due to a false alarm, and an accidental touch possibly occurs when the screen is turned on.

S1206b: The optical proximity driver reports a proximity state to SensorHal.

S1206c: SensorHal reports a proximity state to the application.

For specific description, refer to related content in the foregoing description. Details are not described herein again.

In this embodiment of this application, after playing of the voice message ends, the chat application detects that playing of the voice message ends. The chat application may stop invoking the speaker or the earpiece, that is, the chat application may send, to AudioHal, an instruction for disabling the speaker and/or the earpiece. AudioHal instructs an audio driver to disable the earpiece or speaker in response to the received instruction. In addition, AudioHal sends, to Sensorevent, an indication for writing a speaker disabled state and an earpiece disabled state. In response to the received indication, Sensorevent records that both the earpiece status and the speaker status are a disabled state. SensorHal reads, from Sensorevent, that the speaker status and/or the earpiece status is switched from an enabled state to a disabled state, and SensorHal sends a speaker disabled indication and/or an earpiece disabled indication to the gesture auxiliary algorithm. The gesture auxiliary algorithm may record that the earpiece status and/or the speaker status is a disabled state. In addition, the gesture auxiliary algorithm stops obtaining the ACC data, to reduce power consumption of a system.

In this embodiment of this application, after the speaker is enabled, the gesture auxiliary algorithm starts to obtain the ACC data, and calculates posture data (for example, roll and pitch) and motion data (for example, handup judge) of the electronic device, to prepare, in advance, data required for calculating the gesture lock status. When the user puts the mobile phone next to the ear for listening, the optical proximity driver detects a proximity state, and then reports the proximity state to the chat application. The chat application may start the accidental touch prevention procedure based on the proximity state, that is, indicate the mobile phone to turn off the screen and switch to the earpiece to play the voice message. As described above, invoking the earpiece by the chat application needs interaction between modules. Based on performance impact, the optical proximity driver possibly has not obtained the earpiece enabled state yet. That is, in the procedure shown in FIG. 5, the procedure continues to go to S504, and in this case, the earpiece is already in an enabled state, that is, the earpiece plays the voice message, and the screen is in a screen-off state.

Before the optical proximity driver receives an earpiece enabled message, the optical proximity driver may continue to obtain the status value output by the gesture auxiliary algorithm. In this case, the gesture auxiliary algorithm determines, based on posture data (namely, a posture of the mobile phone) and motion data (namely, a dynamic process of listening next to the ear), that the mobile phone is in a proximity state. That is, as shown in FIG. 7, the gesture auxiliary algorithm performs S703. A determining result is yes, and the procedure goes to S704. Because the optical proximity driver has reported a proximity state, a determining result is still yes in this procedure. Correspondingly, an output status value is true, which indicates that a result obtained for the algorithm optical proximity status is a proximity state. In this example, if the entity optical proximity is abnormally reported as a remote state, that is, in FIG. 5, the procedure goes from S504 to S505, when S505 is performed, the optical proximity driver may determine, based on the output status value of the gesture auxiliary algorithm, that the algorithm optical proximity status is a proximity state. Correspondingly, the optical proximity driver reports a proximity state, to correct an abnormal detection result of the entity optical proximity status.

It may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

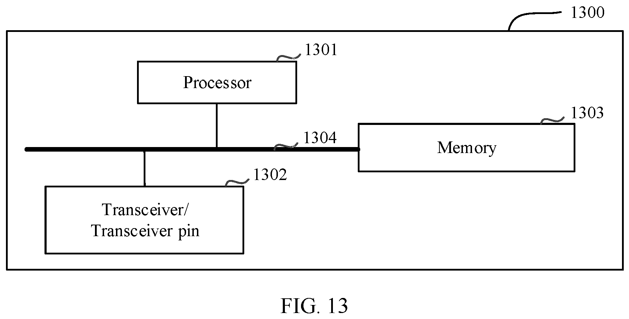

In an example, FIG. 13 is a schematic block diagram of an apparatus 1300 according to an embodiment of this application. The apparatus 1300 may include a processor 1301 and a transceiver/transceiver pin 1302. Optionally, a memory 1303 is further included.

Components in the apparatus 1300 are coupled together through a bus 1304. In addition to a data bus, the bus 1304 further includes a power bus, a control bus, and a status signal bus. However, for clarity of description, various buses are referred to as the bus 1304 in the figure.

Optionally, the memory 1303 may be configured to store the instructions in the foregoing method embodiments. The processor 1301 may be configured to execute the instructions in the memory 1303, control a receive pin to receive a signal, and control a transmit pin to send a signal.

The apparatus 1300 may be the electronic device or a chip in the electronic device in the foregoing method embodiments.

All related content of the steps in the foregoing method embodiments may be cited to function descriptions of corresponding functional modules. Details are not described herein again.

An embodiment further provides a computer storage medium. The computer storage medium stores computer instructions. When the computer instructions are run on an electronic device, the electronic device is enabled to perform the steps of the related method to implement the method in the foregoing embodiments.

An embodiment further provides a computer program product. When the computer program product runs on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method in the foregoing method embodiments.

The electronic device, the computer storage medium, the computer program product, or the chip provided in the embodiments is configured to perform the corresponding method provided above. Therefore, for beneficial effects that can be achieved by the electronic device, the computer storage medium, the computer program product, or the chip, refer to the beneficial effects in the corresponding method provided above. Details are not described herein.

Although this application is described in detail with reference to the foregoing embodiments, a person of ordinary skill in the art should understand that modifications may still be made to the foregoing embodiments, as long as they fall under the scope of the appended claims.

## Claims

1. A voice message playback method, applied to an electronic device, wherein the method comprises:
in response to a received tap operation on a voice message, invoking (S501, S601a) a speaker to play the voice message, wherein a display screen of the electronic device is in a screen-on state;
obtaining (S502, S606c) a first optical proximity status based on a detection result of an optical proximity sensor;
obtaining (S701, S702, S703, S704, S802) a second proximity status based on first status data, wherein status data comprises posture data and motion data, the posture data is used to describe a current posture of the electronic device, and the motion data is used to describe a current motion state of the electronic device;
detecting (S612a, S808a) that both the first optical proximity status and the second proximity status indicate a remote state, and continuing to invoke the speaker to play the voice message, wherein the display screen of the electronic device is in a screen-on state;
obtaining (S502) a third optical proximity status based on a detection result of the optical proximity sensor when a user raises a hand to put the electronic device next to an ear to listen to the voice message;
obtaining a fourth proximity status based on second status data; and
when detecting (S505) that the third optical proximity status indicates a remote state and the fourth proximity status indicates a proximity state, determining the third optical proximity status as an abnormal state, determining, based on the fourth proximity status, that the electronic device is in a next-to-ear listening scenario, and invoking an earpiece to play the voice message, wherein the display screen of the electronic device is in a screen-off state.

2. The method according to claim 1, wherein the method further comprises:
obtaining a fifth optical proximity status based on a detection result of the optical proximity sensor in a process in which the user continues to put the electronic device next to the ear to listen to the voice message;
obtaining a sixth proximity status based on third status data; and
detecting that the fifth optical proximity status indicates a remote state, and the sixth proximity status indicates a proximity state, determining the fifth optical proximity status as an abnormal state, determining (S1007), based on the sixth proximity status, that the electronic device is still in the next-to-ear listening scenario, and continuing to invoke the earpiece to play the voice message, wherein the display screen of the electronic device is in a screen-off state.

3. The method according to claim 1, wherein the detecting that both the first optical proximity status and the second proximity status indicate a remote state, and continuing to invoke the speaker to play the voice message, wherein the display screen of the electronic device is in a screen-on state comprises:
detecting (S804, S904, S914, S1104, S1204) whether the earpiece is in an enabled state;
detecting that the earpiece is in a disabled state, and determining (S805, S905) whether the first optical proximity status indicates a remote state;
determining that the first optical proximity status indicates a remote state, and determining whether the second proximity status indicates a proximity state;
determining that the second proximity status indicates a remote state, and determining that a current target optical proximity status of the electronic device is a remote state; and
continuing to invoke the speaker to play the voice message based on the target optical proximity status, wherein the display screen of the electronic device is in a screen-on state.

4. The method according to claim 1, wherein the detecting that the third optical proximity status indicates a remote state, and the fourth proximity status indicates a proximity state, and determining the third optical proximity status as an abnormal state comprises:
detecting (S503, S804, S904, S914, S1104, S1204) whether the earpiece is in an enabled state;
detecting that the earpiece is in a disabled state, and determining (S504) whether the third optical proximity status indicates a remote state;
determining that the third optical proximity status indicates a remote state, and determining whether the fourth proximity status indicates a proximity state;
determining that the fourth proximity status indicates a proximity state, and determining the third optical proximity status as an abnormal state based on the third optical proximity status and the fourth proximity status; and
determining (S506) the fourth proximity status as a target optical proximity status.

5. The method according to claim 4, wherein the determining, based on the fourth proximity status, that the electronic device is in a next-to-ear listening scenario, and invoking an earpiece to play the voice message, wherein the display screen of the electronic device is in a screen-off state comprises:
determining (S1007), based on the target optical proximity status, that the electronic device is in the next-to-ear listening scenario, and invoking the earpiece to play the voice message, wherein the display screen of the electronic device is in a screen-off state.

6. The method according to claim 2, wherein the detecting that the fifth optical proximity status indicates a remote state, and the sixth proximity status indicates a proximity state, and determining the fifth optical proximity status as an abnormal state comprises:
detecting (S804, S904, S914, S1104, S1204) whether the earpiece is in an enabled state;
detecting that the earpiece is in an enabled state, and determining whether the sixth proximity status indicates a proximity state;
determining that the sixth proximity indicates a proximity state, and determining the fifth optical proximity status as an abnormal state based on the fifth optical proximity status and the sixth proximity status; and
determining the sixth proximity status as a target optical proximity status.

7. The method according to claim 6, wherein the determining, based on the sixth proximity status, that the electronic device is still in the next-to-ear listening scenario, and continuing to invoke the earpiece to play the voice message, wherein the display screen of the electronic device is in a screen-off state comprises:
determining (S1007), based on the target optical proximity status, that the electronic device is in the next-to-ear listening scenario, and continuing to invoke the earpiece to play the voice message, wherein the display screen of the electronic device is in a screen-off state.

8. An electronic device (1300), comprising:
one or more processors (1301) and a memory (1303); and
one or more computer programs, wherein the one or more computer programs are stored in the memory (1303), and when the computer programs are executed by the one or more processors (1301), the electronic device (1300) is enabled to perform the method according to any one of claims 1-7.

9. A computer storage medium, comprising computer instructions, wherein when the computer instructions are run on an electronic device, the electronic device is enabled to perform the method according to any one of claims 1-7.

10. A chip, comprising one or more interface circuits and one or more processors, wherein the interface circuit is configured to receive a signal from a memory of an electronic device, and send the signal to the processor, and the signal comprises computer instructions stored in the memory; and when the processor executes the computer instructions, the electronic device is enabled to perform the method according to any one of claims 1-7.

## Patentansprüche

1. Verfahren zur Wiedergabe von Sprachnachrichten, angewendet auf eine elektronische Vorrichtung, wobei das Verfahren umfasst:
als Reaktion auf eine empfangene Tippoperation auf eine Sprachnachricht, Ansteuern (S501, S601a) eines Lautsprechers zur Wiedergabe der Sprachnachricht, wobei sich ein Anzeigebildschirm der elektronischen Vorrichtung in einem eingeschalteten Zustand befindet;
Ermitteln (S502, S606c) eines ersten optischen Annäherungsstatus basierend auf einem Detektionsergebnis eines optischen Annäherungssensors;
Ermitteln (S701, S702, S703, S704, S802) eines zweiten Annäherungsstatus basierend auf ersten Statusdaten, wobei Statusdaten Haltungsdaten und Bewegungsdaten umfassen, wobei die Haltungsdaten verwendet werden, um eine aktuelle Haltung der elektronischen Vorrichtung zu beschreiben, und die Bewegungsdaten verwendet werden, um einen aktuellen Bewegungszustand der elektronischen Vorrichtung zu beschreiben;
Detektieren (S612a, S808a), dass sowohl der erste optische Annäherungsstatus als auch der zweite Annäherungsstatus einen entfernten Zustand angeben, und fortgesetztes Ansteuern des Lautsprechers zur Wiedergabe der Sprachnachricht, wobei sich der Anzeigebildschirm der elektronischen Vorrichtung in einem eingeschalteten Zustand befindet;
Ermitteln (S502) eines dritten optischen Annäherungsstatus basierend auf einem Detektionsergebnis des optischen Annäherungssensors, wenn ein Benutzer die Hand hebt, um die elektronische Vorrichtung zum Anhören der Sprachnachricht an das Ohr zu halten;
Ermitteln eines vierten Annäherungsstatus basierend auf zweiten Statusdaten; und
beim Detektieren (S505), dass der dritte optische Annäherungsstatus einen entfernten Zustand und der vierte Annäherungsstatus einen Annäherungszustand angibt, Bestimmen des dritten optischen Annäherungsstatus als einen abnormalen Zustand, Bestimmen, basierend auf dem vierten Annäherungsstatus, dass sich die elektronische Vorrichtung in einem Szenario zum Anhören am Ohr befindet, und Ansteuern einer Hörmuschel zur Wiedergabe der Sprachnachricht, wobei sich der Anzeigebildschirm der elektronischen Vorrichtung in einem ausgeschalteten Zustand befindet.

2. Verfahren nach Anspruch 1, wobei das Verfahren ferner umfasst:
Ermitteln eines fünften optischen Annäherungsstatus basierend auf einem Detektionsergebnis des optischen Annäherungssensors in einem Prozess, in dem der Benutzer die elektronische Vorrichtung weiterhin zum Anhören der Sprachnachricht am Ohr hält;
Ermitteln eines sechsten Annäherungsstatus basierend auf dritten Statusdaten; und
Detektieren, dass der fünfte optische Annäherungsstatus einen entfernten Zustand und der sechste Annäherungsstatus einen Annäherungszustand angibt, Bestimmen des fünften optischen Annäherungsstatus als einen abnormalen Zustand, Bestimmen (S1007), basierend auf dem sechsten Annäherungsstatus, dass sich die elektronische Vorrichtung immer noch in dem Szenario zum Anhören am Ohr befindet, und fortgesetztes Ansteuern der Hörmuschel zur Wiedergabe der Sprachnachricht, wobei sich der Anzeigebildschirm der elektronischen Vorrichtung in einem ausgeschalteten Zustand befindet.

3. Das Verfahren nach Anspruch 1, wobei das Erkennen, dass sowohl der erste optische Näherungsstatus als auch der zweite Näherungsstatus einen entfernten Zustand anzeigen, und das fortgesetzte Aufrufen des Lautsprechers zur Wiedergabe der Sprachnachricht, wobei sich der Bildschirm des elektronischen Geräts in einem eingeschalteten Zustand befindet, Folgendes umfasst:
Erkennen (S804, S904, S914, S1104, S1204), ob sich der Ohrhörer in einem aktivierten Zustand befindet;
Erkennen, dass sich der Ohrhörer in einem deaktivierten Zustand befindet, und Bestimmen (S805, S905), ob der erste optische Näherungsstatus einen entfernten Zustand anzeigt;
Bestimmen, dass der erste optische Näherungsstatus einen entfernten Zustand anzeigt, und Bestimmen, ob der zweite Näherungsstatus einen Nähe-Zustand anzeigt;
Bestimmen, dass der zweite Näherungsstatus einen entfernten Zustand anzeigt, und Bestimmen, dass ein aktueller optischer Ziel-Näherungsstatus des elektronischen Geräts ein entfernter Zustand ist; und
Fortsetzen des Aufrufens des Lautsprechers zur Wiedergabe der Sprachnachricht basierend auf dem optischen Ziel-Näherungsstatus, wobei sich der Bildschirm des elektronischen Geräts in einem eingeschalteten Zustand befindet.

4. Das Verfahren nach Anspruch 1, wobei das Erkennen, dass der dritte optische Näherungsstatus einen entfernten Zustand anzeigt und der vierte Näherungsstatus einen Nähe-Zustand anzeigt, sowie das Bestimmen des dritten optischen Näherungsstatus als einen anormalen Zustand Folgendes umfasst:
Erkennen (S503, S804, S904, S914, S1104, S1204), ob sich der Ohrhörer in einem aktivierten Zustand befindet;
Erkennen, dass sich der Ohrhörer in einem deaktivierten Zustand befindet, und Bestimmen (S504), ob der dritte optische Näherungsstatus einen entfernten Zustand anzeigt;
Bestimmen, dass der dritte optische Näherungsstatus einen entfernten Zustand anzeigt, und Bestimmen, ob der vierte Näherungsstatus einen Nähe-Zustand anzeigt;
Bestimmen, dass der vierte Näherungsstatus einen Nähe-Zustand anzeigt, und Bestimmen des dritten optischen Näherungsstatus als einen anormalen Zustand basierend auf dem dritten optischen Näherungsstatus und dem vierten Näherungsstatus; und
Bestimmen (S506) des vierten Näherungsstatus als optischen Ziel-Näherungsstatus.

5. Das Verfahren nach Anspruch 4, wobei das Bestimmen, basierend auf dem vierten Näherungsstatus, dass sich das elektronische Gerät in einem Ohr-nahen Hörszenario befindet, und das Aufrufen eines Ohrhörers zur Wiedergabe der Sprachnachricht, wobei sich der Bildschirm des elektronischen Geräts in einem ausgeschalteten Zustand befindet, Folgendes umfasst:
Bestimmen (S1007), basierend auf dem optischen Ziel-Näherungsstatus, dass sich das elektronische Gerät in dem Ohr-nahen Hörszenario befindet, und Aufrufen des Ohrhörers zur Wiedergabe der Sprachnachricht, wobei sich der Bildschirm des elektronischen Geräts in einem ausgeschalteten Zustand befindet.

6. Verfahren nach Anspruch 2, wobei das Erkennen, dass der fünfte optische Näherungsstatus einen Fernzustand anzeigt und der sechste Näherungsstatus einen Näherungszustand anzeigt, und das Bestimmen des fünften optischen Näherungsstatus als einen anomalen Zustand umfasst:
Erkennen (S804, S904, S914, S1104, S1204), ob sich der Hörer in einem aktivierten Zustand befindet;
Erkennen, dass sich der Hörer in einem aktivierten Zustand befindet, und Bestimmen, ob der sechste Näherungsstatus einen Näherungszustand anzeigt;
Bestimmen, dass die sechste Näherung einen Näherungszustand anzeigt, und Bestimmen des fünften optischen Näherungsstatus als einen anomalen Zustand basierend auf dem fünften optischen Näherungsstatus und dem sechsten Näherungsstatus; und
Bestimmen des sechsten Näherungsstatus als einen Ziel-optischen Näherungsstatus.

7. Verfahren nach Anspruch 6, wobei das Bestimmen, basierend auf dem sechsten Näherungsstatus, dass sich das elektronische Gerät immer noch im Szenario des Hörens am Ohr befindet, und das fortgesetzte Aufrufen des Hörers zur Wiedergabe der Sprachnachricht, wobei sich der Bildschirm des elektronischen Geräts in einem ausgeschalteten Zustand befindet, umfasst:
Bestimmen (S1007), basierend auf dem Ziel-optischen Näherungsstatus, dass sich das elektronische Gerät im Szenario des Hörens am Ohr befindet, und fortgesetztes Aufrufen des Hörers zur Wiedergabe der Sprachnachricht, wobei sich der Bildschirm des elektronischen Geräts in einem ausgeschalteten Zustand befindet.

8. Elektronisches Gerät (1300), umfassend:
einen oder mehrere Prozessoren (1301) und einen Speicher (1303); und
eines oder mehrere Computerprogramme, wobei das eine oder die mehreren Computerprogramme im Speicher (1303) gespeichert sind und, wenn die Computerprogramme von dem einen oder den mehreren Prozessoren (1301) ausgeführt werden, das elektronische Gerät (1300) dazu befähigt wird, das Verfahren nach einem der Ansprüche 1-7 durchzuführen.

9. Computerspeichermedium, umfassend Computerbefehle, wobei, wenn die Computerbefehle auf einem elektronischen Gerät ausgeführt werden, das elektronische Gerät dazu befähigt wird, das Verfahren nach einem der Ansprüche 1-7 durchzuführen.

10. Chip, umfassend eine oder mehrere Schnittstellenschaltungen und einen oder mehrere Prozessoren, wobei die Schnittstellenschaltung dazu konfiguriert ist, ein Signal von einem Speicher eines elektronischen Geräts zu empfangen und das Signal an den Prozessor zu senden, und das Signal im Speicher gespeicherte Computerbefehle umfasst; und wenn der Prozessor die Computerbefehle ausführt, das elektronische Gerät dazu befähigt wird, das Verfahren nach einem der Ansprüche 1-7 durchzuführen.

## Revendications

1. Procédé de lecture de message vocal, appliqué à un dispositif électronique, dans lequel le procédé comprend :
en réponse à une opération de toucher reçue sur un message vocal, l'invocation (S501, S601a) d'un haut-parleur pour lire le message vocal, dans lequel un écran d'affichage du dispositif électronique est dans un état d'écran allumé ;
l'obtention (S502, S606c) d'un premier état de proximité optique sur la base d'un résultat de détection d'un capteur de proximité optique ;
l'obtention (S701, S702, S703, S704, S802) d'un second état de proximité sur la base de premières données d'état, dans lequel les données d'état comprennent des données de posture et des données de mouvement, les données de posture étant utilisées pour décrire une posture actuelle du dispositif électronique, et les données de mouvement étant utilisées pour décrire un état de mouvement actuel du dispositif électronique ;
la détection (S612a, S808a) que le premier état de proximité optique et le second état de proximité indiquent tous deux un état distant, et la poursuite de l'invocation du haut-parleur pour lire le message vocal, dans lequel l'écran d'affichage du dispositif électronique est dans un état d'écran allumé ;
l'obtention (S502) d'un troisième état de proximité optique sur la base d'un résultat de détection du capteur de proximité optique lorsqu'un utilisateur lève la main pour placer le dispositif électronique près de l'oreille afin d'écouter le message vocal ;
l'obtention d'un quatrième état de proximité sur la base de secondes données d'état ; et
lors de la détection (S505) que le troisième état de proximité optique indique un état distant et que le quatrième état de proximité indique un état de proximité, la détermination du troisième état de proximité optique comme un état anormal, la détermination, sur la base du quatrième état de proximité, que le dispositif électronique est dans un scénario d'écoute près de l'oreille, et l'invocation d'un écouteur pour lire le message vocal, dans lequel l'écran d'affichage du dispositif électronique est dans un état d'écran éteint.

2. Procédé selon la revendication 1, dans lequel le procédé comprend en outre :
l'obtention d'un cinquième état de proximité optique sur la base d'un résultat de détection du capteur de proximité optique dans un processus au cours duquel l'utilisateur continue de placer le dispositif électronique près de l'oreille pour écouter le message vocal ;
l'obtention d'un sixième état de proximité sur la base de troisièmes données d'état ; et
la détection que le cinquième état de proximité optique indique un état distant, et que le sixième état de proximité indique un état de proximité, la détermination du cinquième état de proximité optique comme un état anormal, la détermination (S1007), sur la base du sixième état de proximité, que le dispositif électronique est toujours dans le scénario d'écoute près de l'oreille, et la poursuite de l'invocation de l'écouteur pour lire le message vocal, dans lequel l'écran d'affichage du dispositif électronique est dans un état d'écran éteint.

3. Procédé selon la revendication 1, dans lequel la détection que le premier état de proximité optique et le second état de proximité indiquent tous deux un état distant, et la poursuite de l'appel au haut-parleur pour lire le message vocal, tandis que l'écran d'affichage du dispositif électronique est dans un état allumé, comprend :
détecter (S804, S904, S914, S1104, S1204) si l'écouteur est dans un état activé ;
détecter que l'écouteur est dans un état désactivé, et déterminer (S805, S905) si le premier état de proximité optique indique un état distant ;
déterminer que le premier état de proximité optique indique un état distant, et déterminer si le second état de proximité indique un état de proximité ;
déterminer que le second état de proximité indique un état distant, et déterminer qu'un état de proximité optique cible actuel du dispositif électronique est un état distant ; et
continuer à appeler le haut-parleur pour lire le message vocal en fonction de l'état de proximité optique cible, tandis que l'écran d'affichage du dispositif électronique est dans un état allumé.

4. Procédé selon la revendication 1, dans lequel la détection que le troisième état de proximité optique indique un état distant, et que le quatrième état de proximité indique un état de proximité, et la détermination du troisième état de proximité optique comme un état anormal comprend :
détecter (S503, S804, S904, S914, S1104, S1204) si l'écouteur est dans un état activé ;
détecter que l'écouteur est dans un état désactivé, et déterminer (S504) si le troisième état de proximité optique indique un état distant ;
déterminer que le troisième état de proximité optique indique un état distant, et déterminer si le quatrième état de proximité indique un état de proximité ;
déterminer que le quatrième état de proximité indique un état de proximité, et déterminer le troisième état de proximité optique comme un état anormal sur la base du troisième état de proximité optique et du quatrième état de proximité ; et
déterminer (S506) le quatrième état de proximité comme un état de proximité optique cible.

5. Procédé selon la revendication 4, dans lequel la détermination, sur la base du quatrième état de proximité, que le dispositif électronique est dans un scénario d'écoute à l'oreille, et l'appel d'un écouteur pour lire le message vocal, tandis que l'écran d'affichage du dispositif électronique est dans un état éteint, comprend :
déterminer (S1007), sur la base de l'état de proximité optique cible, que le dispositif électronique est dans le scénario d'écoute à l'oreille, et appeler l'écouteur pour lire le message vocal, tandis que l'écran d'affichage du dispositif électronique est dans un état éteint.

6. Procédé selon la revendication 2, dans lequel la détection que le cinquième état de proximité optique indique un état distant, et que le sixième état de proximité indique un état de proximité, et la détermination du cinquième état de proximité optique comme étant un état anormal comprend :
la détection (S804, S904, S914, S1104, S1204) de si l'écouteur est dans un état activé ;
la détection que l'écouteur est dans un état activé, et la détermination de si le sixième état de proximité indique un état de proximité ;
la détermination que le sixième état de proximité indique un état de proximité, et la détermination du cinquième état de proximité optique comme étant un état anormal sur la base du cinquième état de proximité optique et du sixième état de proximité ; et
la détermination du sixième état de proximité comme étant un état de proximité optique cible.

7. Procédé selon la revendication 6, dans lequel la détermination, sur la base du sixième état de proximité, que le dispositif électronique est toujours dans le scénario d'écoute près de l'oreille, et la poursuite de l'appel de l'écouteur pour lire le message vocal, dans lequel l'écran d'affichage du dispositif électronique est dans un état éteint comprend :
la détermination (S1007), sur la base de l'état de proximité optique cible, que le dispositif électronique est dans le scénario d'écoute près de l'oreille, et la poursuite de l'appel de l'écouteur pour lire le message vocal, dans lequel l'écran d'affichage du dispositif électronique est dans un état éteint.

8. Dispositif électronique (1300), comprenant :
un ou plusieurs processeurs (1301) et une mémoire (1303) ; et
un ou plusieurs programmes informatiques, dans lequel les un ou plusieurs programmes informatiques sont stockés dans la mémoire (1303), et lorsque les programmes informatiques sont exécutés par les un ou plusieurs processeurs (1301), le dispositif électronique (1300) est activé pour exécuter le procédé selon l'une quelconque des revendications 1 à 7.

9. Support de stockage informatique, comprenant des instructions informatiques, dans lequel lorsque les instructions informatiques sont exécutées sur un dispositif électronique, le dispositif électronique est activé pour exécuter le procédé selon l'une quelconque des revendications 1 à 7.

10. Puce, comprenant un ou plusieurs circuits d'interface et un ou plusieurs processeurs, dans laquelle le circuit d'interface est configuré pour recevoir un signal provenant d'une mémoire d'un dispositif électronique, et envoyer le signal au processeur, et le signal comprend des instructions informatiques stockées dans la mémoire ; et lorsque le processeur exécute les instructions informatiques, le dispositif électronique est activé pour exécuter le procédé selon l'une quelconque des revendications 1 à 7.
